# EUROPEAN PATENT APPLICATION

(11) **EP 4 459 591 A1**
(43) Date of publication of application: **06.11.2024**
(21) Application number: 22915451.3
(22) Date of filing: 30.09.2022
(51) Int. Cl.: G08G 1/00, G08G 1/09, G08G 1/13, G08G 1/16, G01C 21/28, B60W 30/165

(54) **VEHICLE TRAVEL CONTROL DEVICE, METHOD FOR ACQUIRING VEHICLE POSITION INFORMATION, COMPUTER-READABLE RECORDING MEDIUM, AND PROGRAM FOR ACQUIRING VEHICLE POSITION INFORMATION**

(30) Priority: 27.12.2021 JP 2021213338
(71) Applicant: Broadleaf Co., Ltd., Tokyo 140-0002 (JP)
(72) Inventor: HIRANO, Yoshitake, Tokyo 140-0002 (JP)
(74) Representative: Grünecker Patent- und Rechtsanwälte PartG mbB
(86) International application number: PCT/JP2022/036869
(87) International publication number: WO 2023/127216

(57) **Abstract**

Provided is a vehicle travel control device capable of measuring the current position of a traveling vehicle more accurately. A vehicle travel control device 1 is connected to a remote control device 70 that controls the travel of the vehicle through communication over a network, the vehicle travel control device 1 being equipped with an absolute position calculation unit 102a that acquires, through a GNSS receiver 211 onboard a vehicle C, GNSS information required for standalone positioning and calculates an absolute position of the vehicle by standalone positioning, a reception determination unit 102d that determines whether GNSS correction information required for relative positioning can be received from an external reference station, a relative position calculation unit 102b that calculates a relative position of the vehicle by relative positioning, and a communication unit 701 that transmits information on the current position of the vehicle to the remote control device, wherein the communication unit transmits position information based on the relative position in the case where the GNSS correction information can be received and transmits position information based on the absolute position in the case where the GNSS correction information cannot be received.

## Description

### TECHNICAL FIELD

The present invention relates to a vehicle travel control device, a method for acquiring vehicle position information, a computer-readable recording medium, and a program for acquiring vehicle position information.

### BACKGROUND ART

In recent years, from the viewpoint of reduction in energy consumption and measures against understaffing of drivers, when a plurality of vehicles travel on a highway or the like, a platoon travel in which the vehicles travel while forming a platoon is performed. Patent Literature 1 discloses a platoon travel system in which a plurality of vehicles having an automated driving function are arranged in a traveling direction to perform a platoon travel. In the platoon travel system, an order and the like of the vehicles in the platoon travel are determined based on characteristic information indicating characteristics of the vehicles such that the fuel consumption is minimized.

### CITATION LIST

### PATENT LITERATURE

Patent Literature 1: JP2017-215681A

### SUMMARY OF INVENTION

### TECHNICAL PROBLEM

A management device configured to manage vehicles in the system for managing a platoon as disclosed in Patent Literature 1 issues instructions on an order of vehicles forming the platoon, but Patent Literature 1 does not disclose connection of a plurality of platoons. In a case where another platoon is traveling in the vicinity of a platoon of which destinations or travel speeds are close to each other, if the platoons are caused to travel while being connected to each other, labor saving and improvement of fuel consumption can be expected.

However, in the mechanism of the automated driving and the follow-up driving in the related art, individual vehicles find vehicles to follow and form a platoon. For this reason, in order to connect the platoons to each other, the vehicles are separated one by one from the platoon to which the vehicles belong and then are individually merged into another platoon. In a method in which the vehicles are individually merged, there is a problem that the formation of a new platoon involves a danger on road traffic, and the efficiency is low because and the vehicles control mutually one by one.

The present invention has been made in view of the above problem, and an object of the present invention is to provide a vehicle travel control device, a method for acquiring vehicle position information, a computer-readable recording medium, and a program for acquiring vehicle position information, which are capable of more accurately measuring a current position of a traveling vehicle in order to perform, for example, connection between platoons.

Another object of the present invention is to provide a vehicle management device, a vehicle management method, a vehicle management system, and a vehicle management program that are capable of smoothly connecting platoons and reducing a dangerousness at the connection.

### SOLUTION TO PROBLEM

According to the present invention, the above-described problem is solved by a vehicle travel control device configured to control traveling of a vehicle based on current position information of the vehicle, the vehicle travel control device being connected to a remote control device configured to operate the traveling of the vehicle through communication via a network, the vehicle travel control device including: an absolute position calculation unit configured to acquire GNSS information required for standalone positioning through a GNSS receiver mounted on the vehicle and calculate an absolute position of the vehicle by the standalone positioning; a reception determination unit configured to determine whether GNSS correction information required for relative positioning can be received from an external reference station; a relative position calculation unit configured to calculate a relative position of the vehicle by the relative positioning; and a communication unit configured to transmit current position information of the vehicle to the remote control device, in which the communication unit is configured to: transmit position information based on the relative position when the GNSS correction information can be received; and transmit position information based on the absolute position when the GNSS correction information cannot be received.

According to the present invention, the above-described problem is solved by a vehicle management device configured to manage a vehicle, the vehicle management device including: a second communication unit configured to perform communication with a first communication unit in the vehicle, the vehicle including an absolute position calculation unit configured to acquire GNSS information required for standalone positioning through a GNSS receiver mounted on a host vehicle and calculate an absolute position of the vehicle using the GNSS information, a relative position calculation unit configured to, in response to GNSS correction information required for relative positioning being received from an external reference station, correct the absolute position by the relative positioning using the GNSS correction information and calculate a relative position of the vehicle at the reference station, a position specification unit configured to specify a current position of the vehicle using the relative position, a travel control unit configured to control traveling of the vehicle based on current position information specified by the position specification unit, and the first communication unit configured to transmit and receive the current position information of the vehicle; a management unit configured to manage a travel state of each vehicle subjected to travel control by the travel control unit based on position information of the vehicle acquired by the second communication unit through communication with each vehicle; and a state control unit configured to control the travel state of the vehicle managed by the management unit, in which: the management unit manages each vehicle to be in a travel state where a plurality of vehicles form a group of platoons while traveling based on position information received from another vehicle different from the vehicle; and the state control unit includes: a determination unit configured to determine, when the management unit manages the travel state where the vehicles travel while forming the group of platoons, whether connection between the platoons is permitted based on the travel state of the vehicle; a decision unit configured to decide a connection mode between the platoons based on a determination result obtained by the determination unit; an instruction unit configured to instruct the connection between the platoons by transmitting information on the connection mode decided by the decision unit to a leading vehicle of each platoon; and a connection control unit configured to control the connection between the platoons through communication with the leading vehicle instructed by the instruction unit.

As described above, the vehicle management device can smoothly perform the connection between the platoons by determining, by the determination unit, whether the connection between the platoons is permitted based on the travel state of the vehicles forming the group of platoons, and instructing the connection between the platoons by transmitting the connection mode between the platoons decided by the decision unit to each leading vehicle of the platoons.

Since a connection traveling is performed as a vehicle group by the leading vehicle of the platoon, as compared with a case where the vehicles are individually merged, a dangerousness at the connection is reduced. Therefore, it is possible to achieve a vehicle management device capable of smoothly connecting the platoons and reducing the dangerousness at the connection.

### ADVANTAGEOUS EFFECTS OF INVENTION

According to the present invention, it is possible to achieve a vehicle travel control device, a method for acquiring vehicle position information, a computer-readable recording medium, and a program for acquiring vehicle position information that are capable of more accurately measuring a current position of a traveling vehicle.

Further, according to the present invention, since an instruction is given to a leading vehicle of a platoon to form a vehicle group and platoons are connected to each other, a dangerousness at the connection is reduced as compared with a case where vehicles individually merged. Therefore, it is possible to achieve a vehicle management device, a vehicle management system, and a vehicle management program that are capable of smoothly connecting platoons and reducing the dangerousness at the connection.

### BRIEF DESCRIPTION OF DRAWINGS

[FIG. 1] FIG. 1 is a configuration diagram of an entire vehicle management system according to an embodiment.
[FIG. 2] FIG. 2 is a diagram illustrating a hardware configuration of a vehicle travel control device.
[FIG. 3A] FIG. 3A is a diagram illustrating a hardware configuration of a vehicle information processing device.
[FIG. 3B] FIG. 3B is a diagram illustrating a position of an identification mark attached to a target vehicle.
[FIG. 3C] FIG. 3C is a diagram illustrating a position of an identification mark attached to the target vehicle.
[FIG. 4] FIG. 4 is a diagram illustrating a hardware configuration of a remote control device.
[FIG. 5] FIG. 5 is a diagram illustrating functions of the vehicle travel control device, the vehicle information processing device, and the remote control device.
[FIG. 6] FIG. 6 is a flowchart illustrating a vehicle position information acquisition process.
[FIG. 7A] FIG. 7A is a diagram illustrating a state where autonomous driving control is performed.
[FIG. 7B] FIG. 7B is a diagram illustrating a state where the autonomous driving control is changed to relative driving control.
[FIG. 7C] FIG. 7C is a diagram illustrating a state where the autonomous driving control is changed from the relative driving control, and a host vehicle overtakes the target vehicle.
[FIG. 8] FIG. 8 is a diagram illustrating inter-vehicle distance data.
[FIG. 9] FIG. 9 is a flowchart illustrating a vehicle travel control method.
[FIG. 10] FIG. 10 is a diagram illustrating a hardware configuration of a vehicle management device.
[FIG. 11] FIG. 11 is a diagram illustrating functions of the vehicle management device.
[FIG. 12] FIG. 12 is a diagram illustrating a front platoon and a rear platoon before connection and a new platoon after connection.
[FIG. 13] FIG. 13 is a diagram illustrating an example of a synthesized image generated from images acquired from a leading vehicle and a rearmost vehicle of a platoon.
[FIG. 14] FIG. 14 is a sequence diagram illustrating a connection determination process.
[FIG. 15] FIG. 15 is a sequence diagram illustrating a platoon connection control process.
[FIG. 16] FIG. 16 is a flowchart illustrating an example of a process of determining whether connection between platoons is permitted.
[FIG. 17] FIG. 17 is a flowchart illustrating an example of a process in a case where the connection between platoons is cancelled.

### DESCRIPTION OF EMBODIMENTS

### <<Overview of Vehicle Management System>>

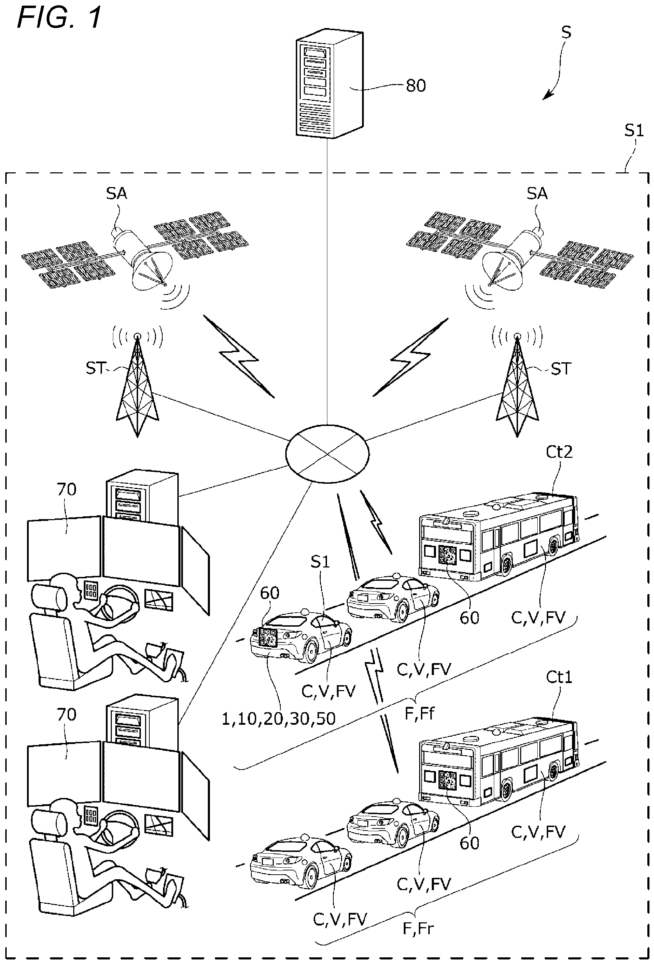

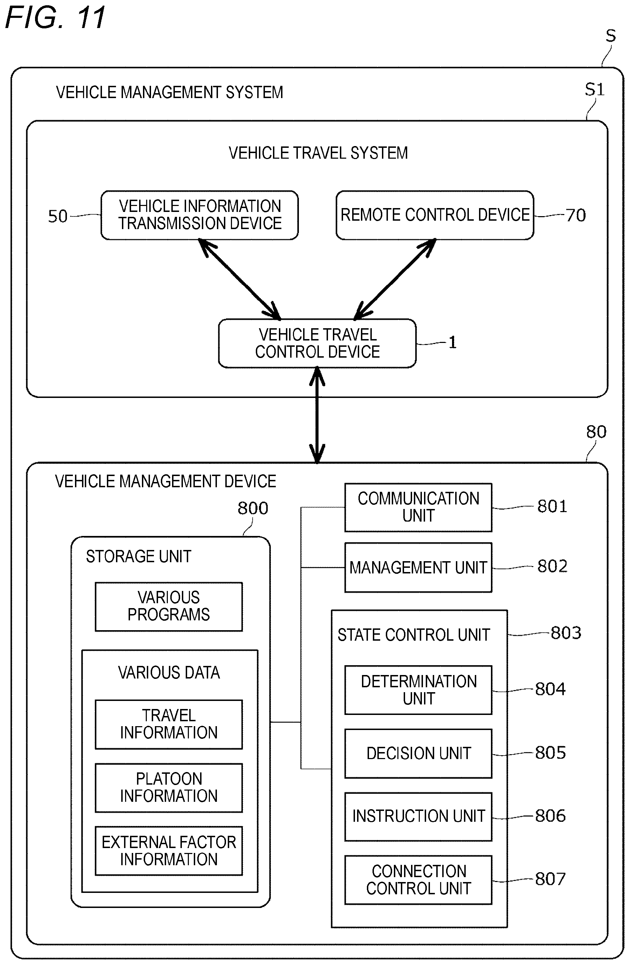

Hereinafter, an embodiment of the present invention will be described with reference to FIGS. 1 to 17.

As illustrated in FIG. 1, a vehicle management system S according to the present embodiment includes a vehicle C that is capable of performing automated driving or remote driving by acquiring position information such as GNSS information and specifying position information (also referred to as "vehicle position" or "vehicle position information") of a host vehicle, and a vehicle management device 80 that receives position information and the like from the vehicle C and manages traveling of a plurality of platoons F formed by a plurality of vehicles C.

Each of the vehicles C forming the platoon F is controlled by a vehicle travel control system S1. The vehicle travel control system S1 is a system that implements "automated driving" in which the vehicle C is caused to travel by grasping an external environment of the vehicle C (a host vehicle V), planning a scheduled travel route of the vehicle C in place of a driver, and controlling the vehicle C along the scheduled travel route, and "follow-up driving" in which the vehicle C is caused to travel by following a predetermined target vehicle FV that is a following destination.

The plurality of vehicles C controlled by the vehicle travel control system S1 repeat switching between the "automated driving" and the "follow-up driving" to form platoons F including a plurality of vehicles. The platoons F indicate groups including a plurality of vehicles, and are also referred to as a "group of platoons".

Since a leading vehicle Ct of the platoons F is remotely driven based on an operation from the vehicle management device 80 or a remote control device 70, the platoons F are remotely driven as the entire vehicle group.

In particular, since the vehicle management device 80 remotely drives only the leading vehicle Ct and sets the vehicle C traveling behind to the follow-up driving, the vehicle management device 80 can be set to a state of remotely driving as a vehicle group (platoon).

When the plurality of vehicles C are traveling by the vehicle travel control system S1, a group of platoons F may be formed on the same road. When a plurality of such a group of platoons F are traveling, if distances between the platoons F are reduced and a destination and a travel speed thereof are also close to each other, it is possible to reduce the number of the leading vehicle Ct to be remotely driven or to reduce the communication charge required for remotely or automatedly driving the leading vehicle Ct by merging the platoons.

In the vehicle management system S according to the present embodiment, the vehicle management device 80 manages a travel state including the position information of the vehicles C forming the platoons F as travel state information, and controls the leading vehicle Ct of each platoon F such that the connection between the platoons F is performed when a predetermined condition is satisfied.

That is, in the present invention, it is clear that each vehicle performs driving control such as automated driving or follow-up driving, so that the plurality of vehicles travel while forming a group of platoons, and that the platoons are not formed by controlling the platoons. Hereinafter, first, the vehicle travel control system S1 that realizes the "automated driving" and the "follow-up driving" of the vehicle C will be described, and thereafter, the vehicle management system S that performs a process of connecting platoons by the vehicle management device 80 will be described.

### «Vehicle Travel Control System»

As described above, the vehicle travel control system S1 is a system that implements "automated driving" in which the vehicle C is caused to travel by grasping an external environment of the vehicle C, planning a scheduled travel route of the vehicle C in place of a driver, and controlling the vehicle C along the scheduled travel route, and "follow-up driving" in which the vehicle C is caused to travel by following the predetermined target vehicle FV In the vehicle travel control system S1, it is possible to perform a "mode switching process" for switching between an automated driving control mode and a follow-up driving control mode.

The "follow-up driving (follow-up driving control)" may be referred to as "relative driving (relative driving control)". In the following description, the "follow-up driving (follow-up driving control)" is referred to as "relative driving".

In the present embodiment, the "automated driving control mode (a first driving control mode)" is simply referred to as an "automated driving mode", and the "follow-up driving control mode (a second driving control mode)" is simply referred to as a "relative driving mode".

The vehicle C that is relatively driven is referred to as a "host vehicle V", and the vehicle C to be followed by the host vehicle V is referred to as a "target vehicle FV".

The "automated driving (automated driving mode)" includes "autonomous driving (an autonomous driving mode)" in which the host vehicle V is autonomously traveling by controlling the host vehicle V, and "remote driving (a remote driving mode)" in which an operator outside the host vehicle V performs a remote operation (an external operation) to cause the host vehicle V to travel. That is, in the present embodiment, "autonomous driving" and "remote driving" are collectively referred to as "automated driving". Basically, the expression "automated driving" means autonomous driving.

In the remote driving, the operator may not be a human, and may be artificial intelligence (AI), for example.

In addition to the "automated driving" and the "relative driving", there is a "manual driving (a manual driving mode)" in which a driver rides on the host vehicle V and actually performs a driving operation. In the mode switching process, in addition to switching between the manual driving mode and the automated driving mode, the manual driving mode and the relative driving mode can be switched.

The "host vehicle V" is a vehicle on which a vehicle travel control device 1 to be described later is mounted and that has a function of performing automated driving and a function of performing relative driving.

The "target vehicle FV" is a vehicle on which at least a vehicle information transmission device 50 to be described later is mounted and that travels in a state where vehicle information (specifically, vehicle identification information, current position information, and scheduled travel route information) can be transmitted through communication via a network. The "target vehicle FV" may include the vehicle travel control device 1 to be described later mounted thereon, and may have a function of performing automated driving and a function of performing relative driving, similarly to the host vehicle V.

The target vehicle FV is not limited to a preceding vehicle that travels ahead of the host vehicle V, and may be a parallel traveling vehicle that travels parallel to the host vehicle V. Alternatively, the target vehicle FV may be a following vehicle that travels behind the host vehicle V.

The target vehicle FV may be, for example, a bus, a taxi, a truck, or the like that travels along a preset scheduled travel route, or a circulation bus or the like that travels along a predetermined circulation route. Of course, other general vehicles may be used.

### <<Hardware Configuration of Vehicle Travel Control System>>

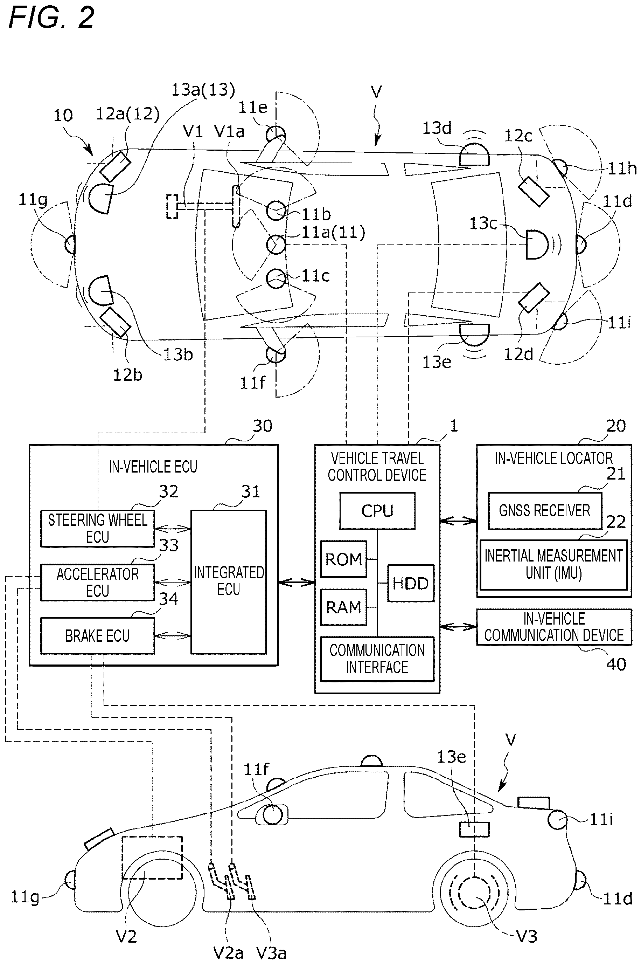

As illustrated in FIGS. 1 and 2, the vehicle travel control system S1 includes the vehicle travel control device 1 that is mounted on each of host vehicles V and comprehensively controls traveling of the host vehicles, an in-vehicle sensor 10 that detects an external environment around the host vehicle V, an in-vehicle locator 20 that receives a GNSS signal from artificial satellites SA and reference stations ST and measures a current position of the host vehicle V, an in-vehicle ECU 30 that controls steering, acceleration and deceleration, and the like of the host vehicle V, and an in-vehicle communication device 40 that communicates with an external device.

The vehicle travel control system S1 includes: the vehicle information transmission device 50 that is mounted on the target vehicle FV, is connected to the vehicle travel control device 1 via a network, and transmits target vehicle information including position information of the target vehicle FV through communication via the network; and identification marks 60 that are attached to the target vehicle FV and in which vehicle identification information of the target vehicle FV is embedded.

The host vehicle V may further include the vehicle information transmission device 50 included in the target vehicle FV and the identification marks 60, and the target vehicle FV may further include the in-vehicle sensor 10, the in-vehicle locator 20, the in-vehicle ECU 30, and the in-vehicle communication device 40 included in the host vehicle V. That is, the host vehicle V and the target vehicle FV may have the same configuration, and thus the host vehicle V and the target vehicle FV may be interchanged with each other to configure the vehicle travel control system S1.

Further, the vehicle travel control system S1 includes the remote control device 70 that is installed outside the host vehicle V and operates (remotely controls) traveling of the host vehicle V through communication with the vehicle travel control device 1 via a network.

The vehicle travel control device 1, the vehicle information transmission device 50, and the remote control device 70 may directly communicate with each other.

### <<Hardware Configuration of Vehicle Travel Control Device>>

As illustrated in FIG. 2, the vehicle travel control device 1 is a computer that is connected to the in-vehicle sensor 10, the in-vehicle locator 20, the in-vehicle ECU 30, and the in-vehicle communication device 40 via an in-vehicle network (CAN).

Specifically, the vehicle travel control device 1 is a computer that includes a CPU serving as a data calculation and control processing device, a ROM, a RAM, and an HDD (SSD) serving as storage devices, and a communication interface that transmits and receives information data via the in-vehicle network.

The storage device of the vehicle travel control device 1 stores a vehicle travel control program and a vehicle management program in addition to a main program that implements necessary functions as a computer. By executing these programs by the CPU, the functions of the vehicle travel control device 1 are exhibited.

The in-vehicle ECU 30 (integrated ECU 31), the vehicle information transmission device 50, and the remote control device 70 are computers having the same hardware configuration.

In order to perform the "autonomous driving", the vehicle travel control device 1 controls the "autonomous travel" of the host vehicle V by controlling the in-vehicle ECU 30 (the integrated ECU 31) based on external environment information obtained from the in-vehicle sensor 10, position information of the host vehicle V obtained from the in-vehicle locator 20, and host vehicle information obtained from the in-vehicle ECU 30.

In order to perform the "relative operation (follow-up driving)", the vehicle travel control device 1 performs wireless communication with the vehicle information transmission device 50 via the in-vehicle communication device 40, and receives target vehicle information including the position information of the predetermined target vehicle FV The in-vehicle ECU 30 (the integrated ECU 31) is controlled based on the external environment information, the position information of the host vehicle V, and the target vehicle information including the position information of the target vehicle FV, thereby controlling the "relative traveling (follow-up traveling)" of the host vehicle V relative to the target vehicle FV

In addition, in order to perform the "remote driving", the vehicle travel control device 1 performs wireless communication with the remote control device 70 through the in-vehicle communication device 40, and transmits the external environment information, the position information of the host vehicle V, and the host vehicle information to the remote control device 70. The remote control device 70 can receive these pieces of information, display contents based on the external environment information and the position information of the host vehicle V on a monitor 71 (a navigation monitor 72), and notify the operator of the contents by a user.

More specifically, the vehicle travel control device 1 is newly mounted on the host vehicle V on which an "autonomous driving function (the in-vehicle sensor 10, the in-vehicle locator 20, and the in-vehicle ECU 30)" is mounted in advance, so that the performance of the existing "autonomous driving function" is improved and a "relative driving function" and a "remote driving function" are newly provided.

### <Configuration of In-vehicle Sensor>

The in-vehicle sensor 10 detects a moving object (another vehicle, a pedestrian, or the like), various structures, a road shape, and the like around the host vehicle V as an external environment around the host vehicle V Specifically, the in-vehicle sensor 10 mainly includes a plurality of image capturing devices 11, a plurality of radars 12, and a plurality of lidars 13.

The in-vehicle sensor 10 may further include a detection sensor other than those described above.

Each of the image capturing devices 11 is a small-sized imaging camera (a wideangle camera) that acquires an external video around the host vehicle V, generates external video data to implement a "sensing function" for travel control of the host vehicle V and a "monitoring function" for a driver (operator), and transmits the external video data to the vehicle travel control device 1.

The plurality of image capturing devices 11 are mounted on the host vehicle V, and include, as main cameras, a first image capturing device 11a, a second image capturing device 11b, and a third image capturing device 11c that are attached to windshields of the host vehicle V and capture images of a front side, a right side, and a left side of the host vehicle V, a fourth image capturing device 11d that is attached to a back bumper of the host vehicle V and captures images of a rear side of the host vehicle V, and a fifth image capturing device 11e and a sixth image capturing device 11f that are attached to left and right mirrors of the host vehicle V and capture images of an obliquely right rear side and an obliquely left rear side of the host vehicle V.

In addition, the image capturing devices 11 include, as sub-cameras, a seventh image capturing device 11g that is attached to a front bumper of the host vehicle V and captures images in front of the host vehicle V, and an eighth image capturing device 11h and a ninth image capturing device 11i that are attached to the periphery of right and left backlights of the host vehicle V and capture images of an obliquely right rear side and an obliquely left rear side of the host vehicle V.

In the present embodiment, a total of nine image capturing devices 11 are attached to predetermined positions of the host vehicle V, but the number and attachment positions of the image capturing devices 11 can be changed according to a type and shape of the host vehicle V. The same applies to the radars 12 and the lidars 13.

As another example of the sub-camera, the seventh image capturing device 11g may be attached to an upper portion of a back glass (a rear glass) of the host vehicle V, and may capture image of the rear of the host vehicle V from the upper portion. In this case, the eighth image capturing device 11h may be attached to a front right A-pillar of the host vehicle V, and the ninth image capturing device 11i may be attached to a front left A-pillar.

Each of the radars 12 is a millimeter wave radar that detects a target object (measures a position and speed of the target object) by emitting radio waves while continuously changing an emission direction and receiving reflected waves from the target object and performs three-dimensional spatial imaging. As compared with the image capturing devices 11 and the lidars 13, it is possible to accurately detect an environmental situation such as night or bad weather with poor visibility.

The radars 12 acquire detection result data (detection signals) of the target object and transmit the detection result data to the vehicle travel control device 1.

The plurality of radars 12 are mounted on the host vehicle V, and include a first radar 12a and a second radar 12b that are attached to the periphery of left and right front lights of the host vehicle V, and a third radar 12c and a fourth radar 12d that are attached to the periphery of left and right backlights of the host vehicle V

The radars 12 are not particularly limited to a millimeter wave radar, and may be a radar such as a laser radar or an ultrasonic sensor.

Each of the lidars 13 is also referred to as a "lidar", and is a remote sensor that performs three-dimensional spatial imaging by emitting laser light and receiving reflected light from the target object to measure a distance to the target object. As compared with the image capturing devices 11 and the radars 12, the distance to the target object in the vicinity can be measured in units of several centimeters.

The lidars 13 acquire distance measurement data obtained by measuring the distance to the target object and transmit the distance measurement data to the vehicle travel control device 1.

The plurality of lidars 13 are mounted on the host vehicle V, and include a first lidar 13a and a second lidar 13b that are attached to the periphery of the left and right front lights of the host vehicle V, a third lidar 13c that is attached to a back pan of the host vehicle V, and a fourth lidar 13d and a fifth lidar 13e that are attached to the periphery of the left and right backlights of the host vehicle V.

### <Configuration of In-vehicle Locator>

The in-vehicle locator 20 measures the current position of the host vehicle V using a sanitary positioning system using the artificial satellites SA and the reference stations ST, and measures an acceleration and an angular velocity of the host vehicle V to increase the measurement accuracy of the current position.

Specifically, the in-vehicle locator 20 includes a GNSS receiver 21 that receives GNSS radio waves (GPS radio waves) from a plurality of artificial satellites SA, and an inertial measurement unit 22 that measures the acceleration and the angular velocity of the host vehicle V.

Specifically, the GNSS receiver 21 is an RTK-GNSS receiver that receives GNSS radio waves from the plurality of (specifically, four) artificial satellites SA, and generates "GNSS information" required for standalone positioning. Further, "GNSS correction information" required for relative positioning is received from the external reference stations ST. The GNSS receiver 21 is an example of a receiving device that receives information specifying position information (vehicle position, vehicle position information) specifying a position of a vehicle, and may be a GPS receiver that receives GPS radio waves, an RNSS receiver that receives RNSS radio waves (radio navigation satellite system), or the like.

The reference station ST is a fixed reference station set at a known point, receives GNSS radio waves from the plurality of artificial satellites SA, generates "GNSS correction information", and transmits the GNSS correction information to the GNSS receiver 21.

The "GNSS information" is distance information between the plurality of artificial satellites SA and the GNSS receiver 21.

The "GNSS correction information" is correction data for correcting an error of a distance caused by a delay or a failure in information reception from a satellite when the reference station ST located at a known point receives GNSS radio waves and the reference station ST communicates with the GNSS receiver 21.

The inertial measurement unit 22 is also called an IMU, includes a three-axis gyro sensor (an angular velocity meter) and a three-axis acceleration sensor (an acceleration meter), measures a three-dimensional angular velocity and acceleration of the host vehicle V, and transmits acceleration and angular velocity information of the host vehicle V to the vehicle travel control device 1.

The vehicle travel control device 1 can measure the current position of the host vehicle V in a smaller error range by combining the GNSS information (the GNSS correction information) received from the GNSS receiver 21 and the angular velocity and acceleration information of the host vehicle V received from the inertial measurement unit 22 and positioning the position.

### <Configuration of In-vehicle ECU>

The in-vehicle ECU 30 is, for example, an ECU for ADAS, includes an integrated ECU 31 in an upper layer that is connected to the vehicle travel control device 1 and transmits and receives various data, a steering wheel ECU 32, an accelerator ECU 33, and a brake ECU 34 in a lower layer that are connected to the integrated ECU 31 in the upper layer and control steering, acceleration and deceleration, and the like of the host vehicle V in a subdivided manner, and forms a hierarchical structure.

The steering wheel ECU 32 is also called a driving support computer, and the accelerator ECU 33 and the brake ECU 34 are also called a power management control unit.

The number and functions of the individual ECUs connected to the integrated ECU 31 are not particularly limited to the three ECUs 32 to 34, and other ECUs may be further provided in the same layer as those of the ECUs.

The steering wheel ECU 32 controls an electric power steering V1 of the host vehicle V in response to an instruction from the integrated ECU 31, and mainly controls a traveling direction of the host vehicle V

The electric power steering V1 includes a steering mechanism that steers front wheels of the host vehicle V. For example, in the manual driving mode, the front wheels of the host vehicle V are steered by a steering operation of a steering wheel V1a by the driver.

The accelerator ECU 33 controls an electric throttle V2 of the host vehicle V in response to an instruction from the integrated ECU 31, and mainly controls the acceleration and deceleration of the host vehicle V

The electric throttle V2 includes a driving mechanism that outputs a driving force for rotating driving wheels of the host vehicle V. For example, in the manual driving mode, an output of an engine is adjusted in accordance with an accelerator operation of the accelerator pedal V2a by the driver.

The brake ECU 34 controls an electromagnetic brake device V3 of the host vehicle V in response to an instruction from the integrated ECU 31, and mainly controls the deceleration and stop of the host vehicle V.

The electromagnetic brake device V3 includes a mechanism that is attached to each wheel of the host vehicle V and decelerates or stops the host vehicle V by applying resistance to the rotation of the wheel. For example, in the manual driving mode, an operation of the electromagnetic brake device V3 is adjusted in accordance with a brake operation of the brake pedal V3a by the driver.

### <In-vehicle Communication Device>

The in-vehicle communication device 40 is a device that performs information communication with the vehicle information transmission device 50 mounted on the target vehicle FV, the remote control device 70 installed outside, the vehicle management device 80, and an external server (not illustrated) via a network.

Specifically, the in-vehicle communication device 40 receives, as information required for "relative driving", the target vehicle information including the position information of the target vehicle FV acquired by the vehicle information transmission device 50, and transmits the target vehicle information to the vehicle travel control device 1.

In addition, the in-vehicle communication device 40 transmits external video information acquired by the vehicle travel control device 1 and the current position information to the remote control device 70 as information required for the "remote driving". Driving operation information of the host vehicle V is received from the remote control device 70 that receives a user input by the operator, and is transmitted to the vehicle travel control device 1.

The in-vehicle communication device 40 transmits the external video information acquired from the vehicle travel control device 1, the current position information, the vehicle information, and the like to the vehicle management device 80 as information required for a "platoons-connection determination process" to be described later. Further, the driving operation information of the host vehicle V is received from the vehicle management device 80 and transmitted to the vehicle travel control device 1.

In addition, the in-vehicle communication device 40 can perform information communication with an external server (not illustrated) and receive the latest traffic information, weather information, and the like from the external server, for example.

### <Hardware Configuration of Vehicle Information Transmission Device>

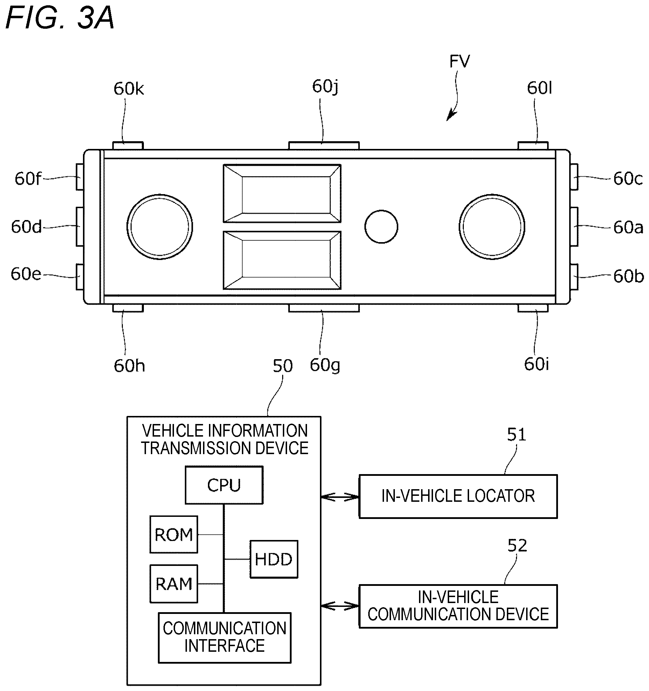

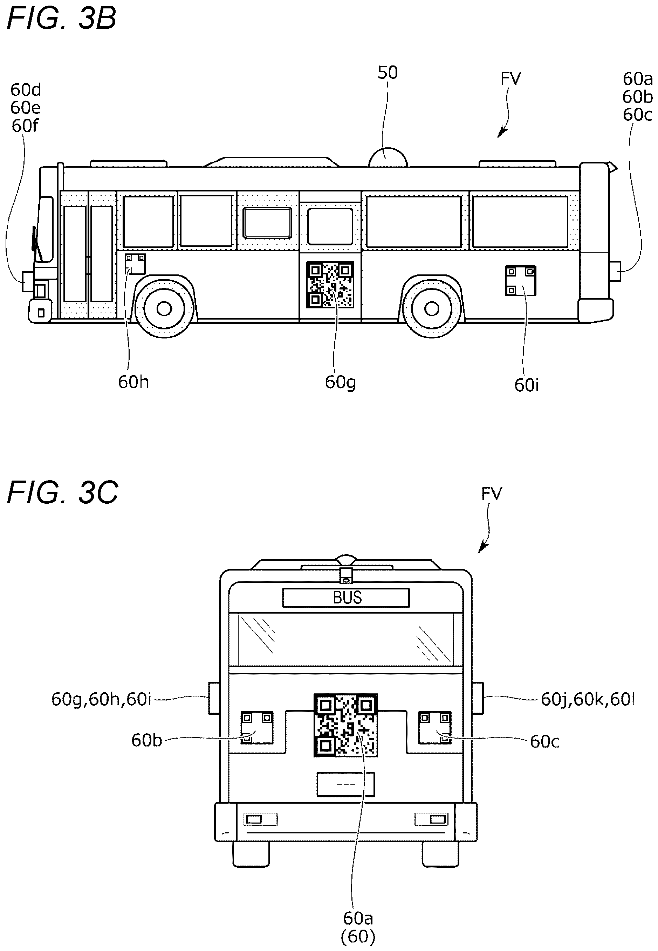

As illustrated in FIGS. 1 and 3A, the vehicle information transmission device 50 is a computer that is mounted on the target vehicle FV, acquires target vehicle information including current position information of the target vehicle FV, and transmits the target vehicle information to the host vehicle V. The vehicle information transmission device 50 includes an in-vehicle locator 51 and an in-vehicle communication device 52 as a specific hardware configuration.

The "target vehicle information" includes position information (real time position information) of the target vehicle FV, scheduled travel route information, and vehicle identification information, and is stored in the storage unit 500 of the vehicle information transmission device 50.

The "vehicle identification information" is a vehicle ID for identifying the target vehicle FV, and information such as a vehicle type name, a model, and a frame number is associated with each vehicle ID and stored in the storage unit 500. The vehicle identification information is stored in the storage unit 500, and is also embedded in the identification marks 60 attached to the target vehicle FV.

### <Configuration of In-vehicle Locator>

Similarly to the in-vehicle locator 20 described above, the in-vehicle locator 51 includes a GNSS receiver 51a that receives GNSS radio waves (GPS radio waves) from the plurality of artificial satellites SA, and an inertial measurement unit 51b that measures an acceleration and an angular velocity of the target vehicle FV.

The in-vehicle communication device 52 is a device that performs information communication with the vehicle travel control device 1 mounted on the host vehicle V via a network.

Specifically, the in-vehicle communication device 52 transmits, as information required for the "relative driving" of the host vehicle V, the target vehicle information to the vehicle travel control device 1 (the in-vehicle communication device 40) at all times or as necessary.

Specifically, the in-vehicle communication device 52 can transmit the position information of the target vehicle FV in the target vehicle information in real time.

The expression "transmit in real time" includes a case where the position information is transmitted at the same timing as a change in the position information of the target vehicle FV, and a case where the position information is transmitted in a state where some time lag occurs.

### <Identification Mark>

As illustrated in FIGS. 3A to 3C, the identification mark 60 is a two-dimensional bar codes in which vehicle identification information for identifying the target vehicle FV is embedded (stored), and a plurality of the identification marks 60 are attached to an outer surface of the target vehicle FV. In each of the identification marks 60, information capable of specifying a scheduled travel route of the target vehicle FV may be embedded together.

The identification mark 60 is recognized by the image capturing device 11 of the host vehicle V.

Specifically, when the identification mark 60 is recognized in a video captured by the image capturing device 11, the image capturing device 11 acquires, as recognition results, vehicle identification information of the target vehicle FV embedded in the identification mark 60, information capable of specifying a scheduled travel route, and the like. The vehicle travel control device 1 can acquire the vehicle identification information of the target vehicle FV from the image capturing device 11 through network communication in a predetermined communication method or via the in-vehicle network (CAN).

In the above embodiment, the vehicle identification information can be acquired from the vehicle information transmission device 50 and the identification mark 60.

The identification marks 60 includes a first identification mark 60a, a second identification mark 60b, and a third identification mark 60c that are attached to a central portion, a left-side end portion, and a right-side end portion in a vehicle width direction on a rear surface of the target vehicle FV, respectively, and a fourth identification mark 60d, a fifth identification mark 60e, and a sixth identification mark 60f that are attached to a central portion, a left-side end portion, and a right-side end portion on a front surface of the target vehicle FV, respectively.

The identification marks 60 includes a seventh identification mark 60g, an eighth identification mark 60h, and a ninth identification mark 60i that are attached to a central portion, a front end portion, and a rear end portion in a vehicle front-rear direction on a left side surface of the target vehicle FV, respectively, and a tenth identification mark 60j, an eleventh identification mark 60k, and a twelfth identification mark 60l that are attached to a central portion, a front end portion, and a rear end portion on a right side surface of the target vehicle FV, respectively.

The first identification mark 60a, the fourth identification mark 60d, the seventh identification mark 60g, and the tenth identification mark 60j that are disposed at the central portions of the rear surface, the front surface, and both side surfaces of the target vehicle FV, respectively, are formed to be slightly larger than the other identification marks. Therefore, when the host vehicle V travels around the target vehicle FV, the image capturing device 11 can easily recognize the identification mark 60. In other words, the vehicle travel control device 1 can easily detect the presence of the target vehicle FV.

In each of the identification marks 60a to 60l, vehicle identification information of the target vehicle FV is embedded, and mark position information indicating a position (a vehicle body position) at which each identification mark 60 is attached to the target vehicle FV is embedded.

Therefore, when any one of the identification marks 60 among the identification marks 60a to 60l is recognized by the image capturing device 11 of the host vehicle V, the vehicle travel control device 1 can acquire the vehicle identification information of the target vehicle FV and detect the target vehicle FV.

In addition, for example, by recognizing the identification mark 60a and the identification mark 60c among the identification marks 60a to 60l or by recognizing only the identification mark 60c, the vehicle travel control device 1 can detect that the host vehicle V is at a rear position of the target vehicle FV and further at a right position of the target vehicle FV based on the mark position information.

In particular, the vehicle travel control device 1 can accurately grasp a position (a relative position) of the target vehicle FV relative to the host vehicle V based on environment information around the host vehicle V, the position information of the host vehicle V, the position information of the target vehicle FV, and the mark position information acquired from the identification mark 60.

The identification mark 60 may be marked with ink, which is invisible and is called transparent ink, invisible ink, or the like, and may be recognized mainly by irradiating high-frequency ultraviolet rays.

### <Hardware Configuration of Remote Control Device>

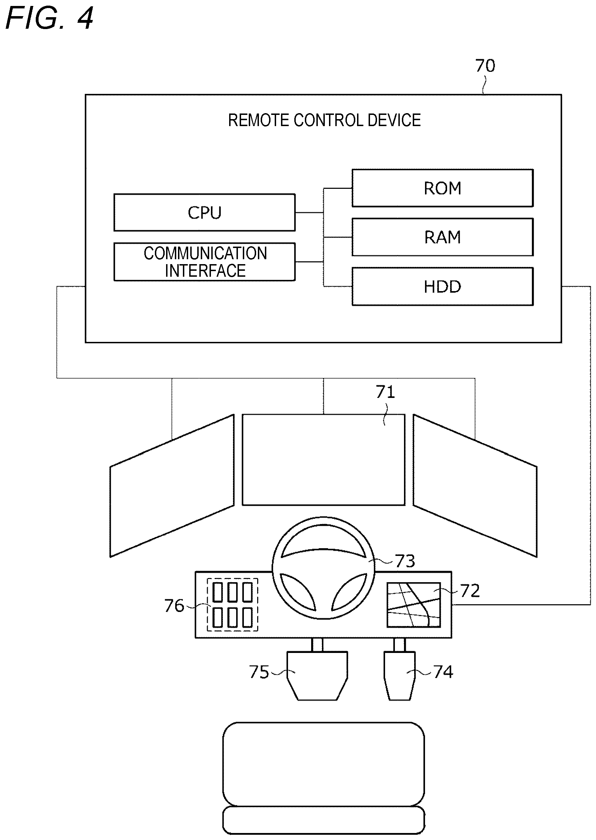

As illustrated in FIGS. 1 and 4, the remote control device 70 is a computer that is operated by an operator to perform "remote driving" of the host vehicle V, and includes a plurality of monitors 71, a navigation monitor 72, a steering wheel 73, an accelerator pedal 74, a brake pedal 75, and a plurality of operation switches 76 as a specific hardware configuration.

The remote control device 70 may further include components such as a speaker, a microphone, and a shift lever.

The monitors 71 and the navigation monitor 72 are display units that output visual information for performing the "remote driving", and the monitors 71 display a synthesized video (a synthesized image) obtained by synthesizing the external videos of the host vehicle V obtained by the plurality of image capturing devices 11a to 11i based on predetermined layout information.

The predetermined layout information is, for example, a display mode of a layout that does not create a blind spot for the operator and is easy for the operator to operate. At this time, a plurality of pieces of layout information including predetermined layout information may be associated with each other by a layout ID (layout identification information) and stored in the storage unit 100 of the vehicle travel control device 1. In this case, when a predetermined layout information change operation is performed using the operation switches 76 or the like, the changed layout ID is transmitted from the remote control device 70 to the vehicle travel control device 1.

The vehicle travel control device 1 generates a synthesized video obtained by synthesizing the external videos based on the layout information corresponding to the changed layout ID, and transmits the synthesized video to the remote control device 70. Thus, the synthesized video is changed and displayed on the monitors 71.

The steering wheel 73 is an operation unit that is operated by an operator and is used to adjust a steering angle (a steering amount) of the host vehicle V.

The accelerator pedal 74 and the brake pedal 75 are operation units that are operated by an operator and are used to adjust the driving of the electric throttle V2 of the host vehicle V and the operation of the electromagnetic brake device V3.

The plurality of operation switches 76 are used to input setting information for performing, for example, "remote driving" by the user. For example, by the operator appropriately operating the operation switches 76, the external videos (the synthesized video) of the host vehicle V can be switched to a predetermined layout display, and the driving mode can be switched among the autonomous driving mode, the relative driving mode, and the remote driving mode.

### <Function of Vehicle Travel Control Device>

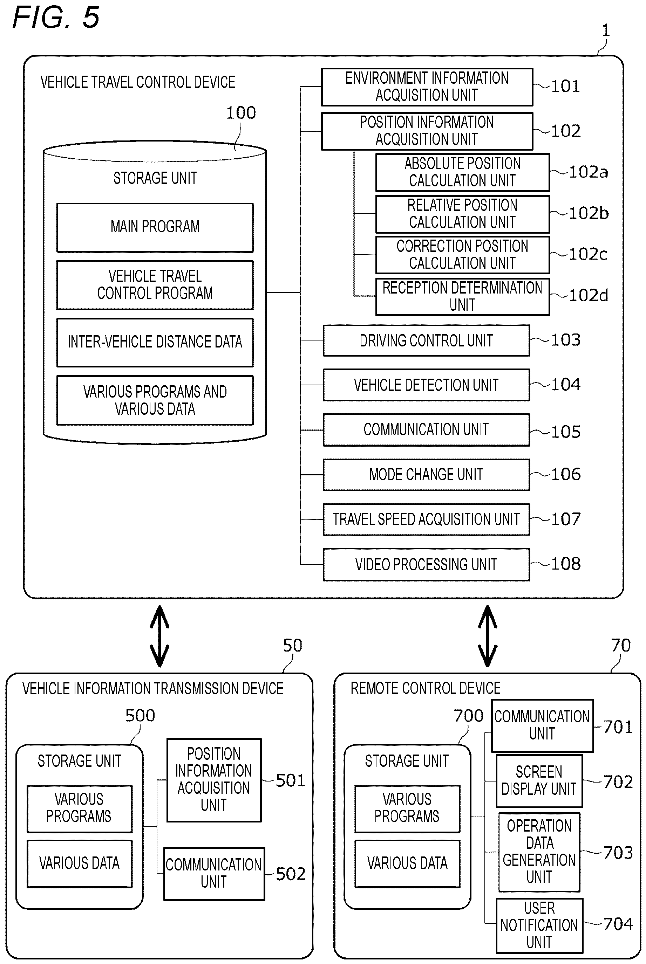

As illustrated in FIG. 5, from the viewpoint of functions, the vehicle travel control device 1 includes, as main components, a storage unit 100 that stores various programs and various data, an environment information acquisition unit 101, a position information acquisition unit 102 (a position specification unit), a driving control unit 103 (a travel control unit), a vehicle detection unit 104, a communication unit 105 (a first communication unit), a mode change unit 106, a travel speed acquisition unit 107, and a video processing unit 108.

These components are implemented by a CPU, a ROM, a RAM, an HDD, a communication interface, various programs, and the like.

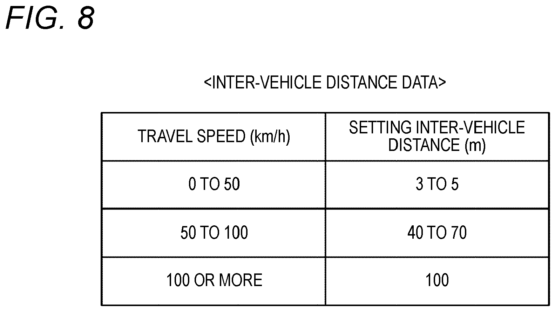

The storage unit 100 stores vehicle identification information of the host vehicle V, scheduled travel route information of the host vehicle V, "inter-vehicle distance data" illustrated in FIG. 8, and the like.

From the viewpoint of functions, the vehicle information transmission device 50 includes, as main components, a storage unit 500 that stores various programs and various data, a position information acquisition unit 501 that acquires "current position information" of the target vehicle FV, and a communication unit 502 that transmits and receives various data to and from the vehicle travel control device 1.

The storage unit 500 stores "target vehicle information" including current position information of the target vehicle FV, scheduled travel route information, and vehicle identification information.

The position information acquisition unit 501 acquires the "current position information" of the target vehicle FV in real time using the in-vehicle locator 51. By storing the acquired "current position information" in the storage unit 500, it is possible to record a travel trajectory (a past travel route) of the target vehicle FV on which the vehicle information transmission device 50 is mounted, and the travel trajectory of the target vehicle FV is stored in the storage unit 500.

The communication unit 502 transmits the "target vehicle information" to the vehicle travel control device 1 (the in-vehicle communication device 40) using the in-vehicle communication device 52. In addition, the "current position information" of the target vehicle FV among the target vehicle information is transmitted in real time.

From the viewpoint of functions, the remote control device 70 includes, as main components, a storage unit 700 that stores various programs and various data, a communication unit 701 that transmits and receives various data to and from the vehicle travel control device 1, a screen display unit 702 that displays an external video of the host vehicle V and vehicle information on the monitors 71 and displays contents (for example, vehicle navigation) based on current position information of the host vehicle V on the navigation monitor 72, an operation data generation unit 703 that receives an input of a user operation and generates operation data, and a user notification unit 704 that notifies an operator of the user.

Hereinafter, functions of the vehicle travel control device 1 included in the host vehicle V will be described in detail.

### «External Environment Information and Position Information of Host Vehicle»

The environment information acquisition unit 101 acquires "environment information (strictly, external environment detection information)" around the host vehicle V from the in-vehicle sensor 10.

Specifically, as the "environment information", external video data around the host vehicle V is acquired from the image capturing device 11, detection result data of a target object around the host vehicle V is acquired from the radar 12, and distance measurement data obtained by measuring a distance from the lidar 13 to the target object of the host vehicle V is acquired.

Specifically, the "environment information" is detection information such as a moving object (another vehicle, a pedestrian, or the like) around the host vehicle V, various structures, a road shape, or the like, is also referred to as traveling environment information, and includes traffic environment information, road environment information, or the like.

The environment information acquisition unit 101 can acquire information on the travel state of the target vehicle FV from the in-vehicle sensor 10 in real time as "environment information".

The "information on the travel state" is information on a traveling operation, an acceleration operation, a deceleration operation, a stop operation, a left turn operation, a right turn operation, a backward movement operation, and the like at a constant speed according to the target vehicle FV, in other words, behavior information of the target vehicle FV (information based on the behavior).

When the environment information acquisition unit 101 acquires the information on the travel state of the target vehicle FV in real time, the vehicle travel control device 1 can detect, for example, that the traveling target vehicle FV stops, that the stopped target vehicle FV starts traveling, that the target vehicle FV starts traveling on a route different from the scheduled travel route of the host vehicle V, and the like based on a change in the information on the travel state of the target vehicle FV (a change in the behavior information).

At this time, "the target vehicle FV starts traveling on a route different from the scheduled travel route of the host vehicle V (the scheduled travel route of the target vehicle FV does not match the scheduled travel route of the host vehicle V)" is determined by determining whether a travel trajectory of the host vehicle V is the scheduled travel route of the host vehicle V based on the "travel trajectory of the target vehicle FV" stored in the storage unit 500 of the target vehicle FV and the "travel trajectory of the host vehicle V" to be described later.

The environment information acquisition unit 101 may further acquire the "vehicle control information" of the host vehicle V from the in-vehicle ECU 30. Examples of the "vehicle control information" include "steering angle information" obtained from the steering wheel ECU 32, "throttle opening degree information" obtained from the accelerator ECU 33, and "brake depression amount information" obtained from the brake ECU 34.

The position information acquisition unit 102 acquires "current position information" of the host vehicle V from the in-vehicle locator 20.

Specifically, the position information acquisition unit 102 acquires the GNSS information (the GNSS correction information) from the GNSS receiver 21, acquires the angular velocity and acceleration information of the host vehicle V from the inertial measurement unit 22, and specifies the current position of the host vehicle V based on the GNSS information (the GNSS correction information) and the angular velocity and acceleration information.

By storing the acquired "current position information" in the storage unit 100, it is possible to record the travel trajectory (a past travel route) of the host vehicle V on which the vehicle travel control device 1 is mounted, and the travel trajectory of the host vehicle V is stored in the storage unit 100. The travel trajectory of the host vehicle V is used to determine whether the host vehicle V is on a scheduled travel route on which the host vehicle V travels, and to set a new scheduled travel route to be guided to the scheduled travel route as necessary.

The "current position information" may be an "absolute position" calculated by standalone positioning, a "relative position" calculated by relative positioning, or a "corrected absolute position" or a "corrected relative position" corrected based on the "angular velocity and acceleration information" of the host vehicle V.

The position accuracy of the "absolute position" is about ± 10 m, and the position accuracy of the "relative position" is about ± 40 cm. The position accuracy of the "corrected absolute position" is higher than the position accuracy of the absolute position, and the position accuracy of the "corrected relative position" is about ± 5 cm, which is the highest position accuracy.

### <Calculation Method of Current Position Information>

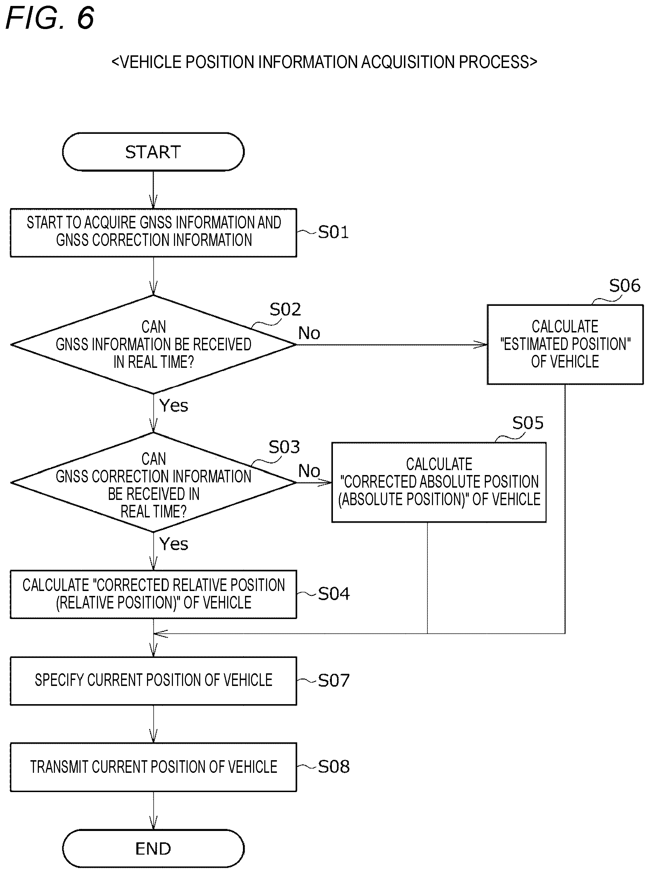

Next, an example of a process of a program for acquiring vehicle position information (a vehicle position information acquisition process) performed by the vehicle travel control system S1 will be described with reference to FIG. 6.

The absolute position calculation unit 102a acquires the "GNSS information" required for standalone positioning through the GNSS receiver 21 and calculates the "absolute position" of the host vehicle V by the standalone positioning (step S01: an absolute position calculation process, an absolute position calculation step).

The "absolute position" of the host vehicle V is a three-dimensional position of the host vehicle V obtained by receiving GNSS radio waves from the plurality of artificial satellites SA, measuring distances between the artificial satellites SA located at known points and the host vehicle V, and solving a three-dimensional processing equation for obtaining unknown points from the measured distances (corresponding to the GNSS information).

In step S01, the relative position calculation unit 102b acquires the "GNSS correction information" required for the relative positioning, corrects the "absolute position" by the relative positioning, and calculates the "relative position" of the host vehicle V (a relative position calculation process, a relative position calculation step).

The "relative position" of the host vehicle Visa three-dimensional position of the host vehicle V that is obtained from the measured distance (corresponding to the GNSS correction information) by receiving GNSS radio waves at the reference station ST located at a known points, acquiring a distance (a distance between the artificial satellite SA and the host vehicle V) having a smaller measurement error from the reference station ST.

A calculation method of the "relative position" includes a calculation method of an RTK positioning method (an interferometric positioning method) and a calculation method of a DGPS positioning method (a relative positioning method). Any calculation method may be used.

A correction position calculation unit 102c acquires the "angular velocity and acceleration information" of the host vehicle V and calculates a "corrected absolute position" obtained by correcting the absolute position of the host vehicle V based on the "GNSS information" and the "acceleration and angular velocity information".

The "corrected absolute position" of the host vehicle V is a three-dimensional position of the host vehicle V obtained by combining the GNSS information and the angular velocity and acceleration information (also referred to as IMU information) of the host vehicle V and positioning the position.

The correction position calculation unit 102c calculates a "corrected relative position" obtained by correcting the relative position of the host vehicle V based on the "GNSS correction information" and the "acceleration and angular velocity information".

A reception determination unit 102d determines whether the GNSS information can be received in real time (step S02). Subsequently, in response to determining that the GNSS information can be received in real time (step S02: Yes), the reception determination unit 102d determines whether the GNSS correction information can be received in real time (step S03).

Specifically, the reception determination unit 102d determines whether the radio waves can be received from the artificial satellites SA and whether data can be transmitted and received to and from the reference stations ST on the assumption that there is an obstacle around the host vehicle V and the radio waves cannot be received from the artificial satellites SA and the data cannot be transmitted and received to and from the reference stations ST.

In response to determining by the reception determination unit 102d that the GNSS information and the GNSS information can be received in real time (step S03: Yes), the position information acquisition unit 102 specifies a current position of the host vehicle V using a "corrected relative position" with the highest position accuracy (a position specification step, a position specification process).

In response to determining that the GNSS information can be received in real time and the GNSS correction information cannot be received in real time (step S03: No), the position information acquisition unit 102 specifies a current position of the host vehicle V using a "corrected absolute position" with high position accuracy.

Further, in response to determining that the GNSS information and the GNSS correction information cannot be received in real time (step S02: No), the position information acquisition unit 102 may specify a current position of the host vehicle V using an "estimated position" calculated based on received latest "GNSS information" and the "acceleration and angular velocity information" received immediately before (step S06).

The position information acquisition unit 102 acquires the "corrected relative position" with the highest accuracy as the "position information" of the host vehicle V. On the other hand, when data cannot be transmitted and received to and from the reference stations ST, a "corrected absolute position" is acquired. Alternatively, when there is an obstacle around the host vehicle V and the radio waves cannot be received from the artificial satellites SA, an "estimated position" is acquired (step S07).

After that the current position of the host vehicle V is specified, the host vehicle V transmits the current position of the host vehicle V to the remote control device 70, the following vehicles, and the vehicle management device 80 (step S08).

Position information from a travel start position to a travel end position of the host vehicle V acquired by the position information acquisition unit 102 is aggregated, and thus actual travel route information (also referred to as travel trajectory information or travel history information) of the host vehicle V is generated.

The generated travel route information (travel route data) of the host vehicle V is stored in the storage unit 100 in association with information on the travel date and time and the travel time, information on a driving mode of the host vehicle V (for example, the number of times of changing the driving mode and the execution time of each driving mode), vehicle information of the target vehicle FV to follow in the relative driving mode, and the like.

### <<Autonomous Driving Control>>

The driving control unit 103 controls the integrated ECU 31 based on the "environment information" obtained by the environment information acquisition unit 101 and the "position information of the host vehicle V" obtained by the position information acquisition unit 102, and performs the "autonomous driving control" of the host vehicle V.

In order to perform the "autonomous driving control" of the host vehicle V, the driving control unit 103 may acquire the "vehicle information" of the host vehicle V from the in-vehicle ECU 30 and further combine the "vehicle information" to control the integrated ECU 31.

When the host vehicle V starts traveling along the scheduled travel route of the host vehicle V, the driving control unit 103 performs "autonomous driving control" and starts autonomous driving of the host vehicle V.

Specifically, when the host vehicle V starts traveling, the host vehicle V is set in the "autonomous driving mode", and the driving control unit 103 performs autonomous driving control in a state where the "autonomous driving mode" is set.

Thereafter, the host vehicle V travels toward a destination of the scheduled travel route while a driving mode of the host vehicle V is changed between the "autonomous driving mode" and the "relative driving mode" by the mode change unit 106.

When the target vehicle FV to follow is detected at the timing when the host vehicle V starts traveling and the position information of the target vehicle FV is obtained in real time, the mode change unit 106 may change the "autonomous driving mode" to the "relative driving mode". In this case, the driving control unit 103 performs the relative driving control in a state where the "relative driving mode" is set, and starts the relative driving of the host vehicle V relative to the target vehicle FV.

Alternatively, when the host vehicle V starts traveling, the "remote driving mode" may be set instead of the "autonomous driving mode", and the driving control unit 103 may perform the remote driving control in a state where the "remote driving mode" is set.

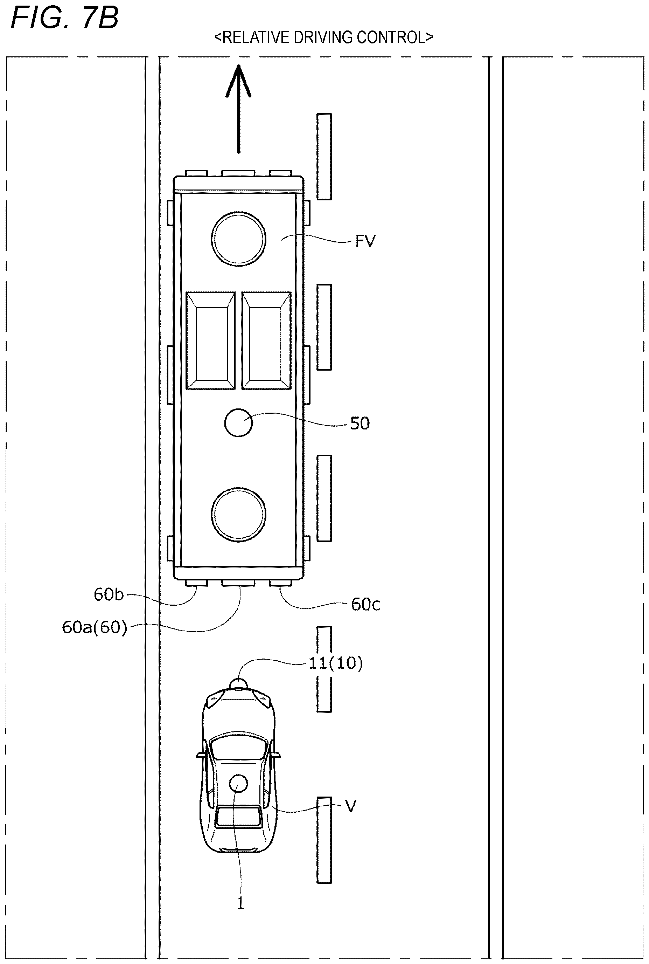

The vehicle detection unit 104 detects that a predetermined preceding vehicle traveling ahead of the host vehicle V is the target vehicle FV to follow on the scheduled travel route of the host vehicle V (see FIG. 7B).

The "target vehicle to follow" includes a vehicle that travels on a scheduled travel route that partially matches at least the scheduled travel route of the host vehicle V, and a vehicle that travels on the same route as the scheduled travel route of the host vehicle V at a constant travel distance (travel time).

The "target vehicle to follow" includes, for example, a vehicle that travels around the host vehicle V when traveling on a highway, a general road, or the like having no branch point at a constant travel distance (travel time).

Specifically, the vehicle detection unit 104 detects that a predetermined preceding vehicle is the target vehicle FV based on recognition results of the identification marks 60 of the preceding vehicle recognized by the image capturing devices 11.

For example, when the first identification mark 60a of the target vehicle FV is recognized, the vehicle detection unit 104 detects that the target vehicle FV is present at a front position of the host vehicle V.

Alternatively, when the seventh identification mark 60g of the target vehicle FV is recognized, the vehicle detection unit 104 detects that the target vehicle FV is present at a right position of the host vehicle V

More specifically, by acquiring the recognition results of the identification marks 60a to 60l of the target vehicle FV from the image capturing devices 11 in real time, the vehicle detection unit 104 can accurately detect a relative position of the target vehicle FV relative to the host vehicle V in real time based on the vehicle identification information (a shape and size of the target vehicle FV) of the target vehicle FV and the mark position information embedded in the identification marks 60a to 60l.

For example, the vehicle travel control device 1 can accurately detect that the target vehicle FV travels at a front position slightly on a left side relative to the host vehicle V, or that the target vehicle FV travels in parallel with the host vehicle V and travels slightly in front of the host vehicle V, and the like. In this case, the relative position of the target vehicle FV may be specified by, for example, a three-dimensional coordinate position having the host vehicle V as a center position.

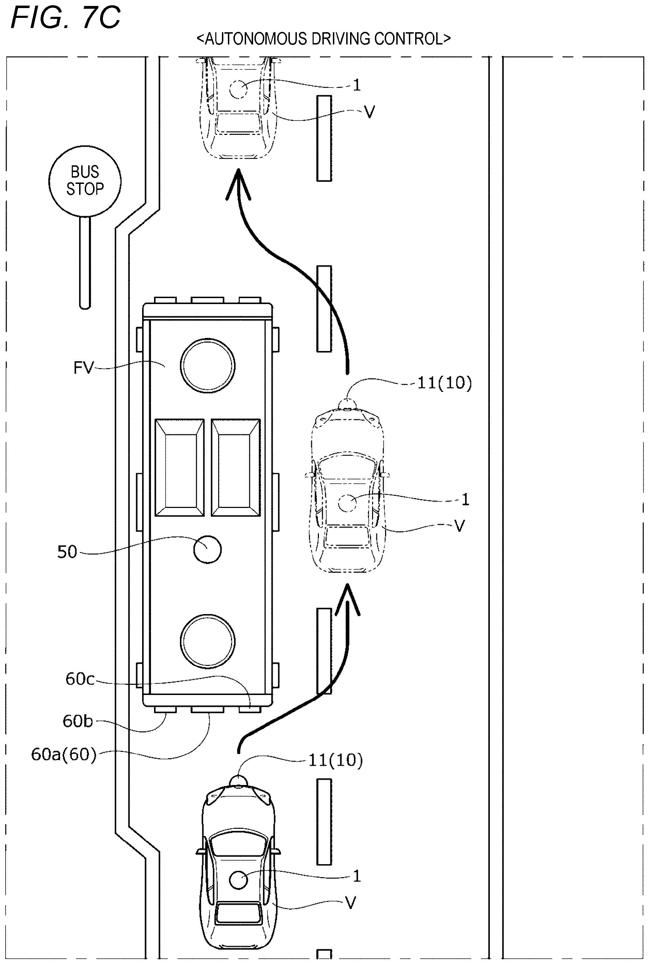

Thus, as illustrated in FIG. 7B, the host vehicle V can be relatively driven while maintaining an appropriate inter-vehicle distance between the host vehicle V and the target vehicle FV. In addition, as illustrated in FIG. 7C, the host vehicle V can be autonomously driven such that the host vehicle V appropriately overtakes the target vehicle FV.

The vehicle detection unit 104 detects the target vehicle FV based on the recognition results of the identification marks 60, and the target vehicle FV may be detected by other detection units.

For example, the vehicle detection unit 104 may acquire the vehicle identification information of the target vehicle FV from the vehicle information transmission device 50 mounted on the target vehicle FV through wireless communication using the in-vehicle communication device 40, and detect the target vehicle FV based on the vehicle identification information.

In other words, the target vehicle FV may be detected by the identification marks 60 attached to the target vehicle FV, or the target vehicle FV may be detected through wireless communication with the vehicle information transmission device 50 mounted on the target vehicle FV

An image of a license plate of the target vehicle FV is captured by the image capturing devices 11, the vehicle detection unit 104 may read license information from the license plate, acquire the vehicle identification information of the target vehicle FV from a management server (for example, the vehicle management device 80) on a network, and detect the target vehicle FV based on the vehicle identification information.

The communication unit 105 receives target vehicle information including at least the position information of the target vehicle FV detected by the vehicle detection unit 104.

Specifically, when the vehicle detection unit 104 detects the target vehicle FV, the communication unit 105 starts communication with the vehicle information transmission device 50 via a network.

The communication unit 105 receives the position information of the target vehicle FV and the scheduled travel route information from the vehicle information transmission device 50 mounted on the target vehicle FV

The position information acquisition unit 501 of the vehicle information transmission device 50 acquires the "current position information" of the target vehicle FV in real time in the same manner as the above-described position information acquisition unit 102.

### <<Mode Change (Autonomous driving → Relative Driving)>>

The mode change unit 106 changes the "autonomous driving mode (autonomous driving control)" to the "relative driving mode (relative driving control)" when a predetermined relative driving start condition is satisfied.

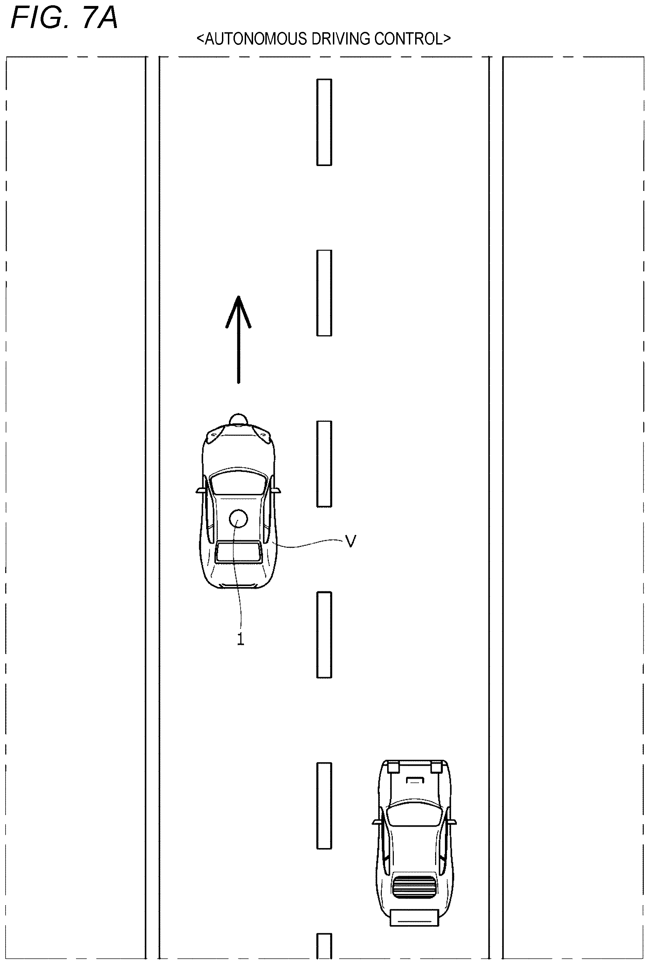

Specifically, in a case where the autonomous driving control is performed in the state where the "autonomous driving mode" is set as illustrated in FIG. 7A, when the target vehicle FV is detected by the vehicle detection unit 104 and the target vehicle information is received by the communication unit 105, the mode change unit 106 changes the "autonomous driving mode" to the "relative driving mode" as illustrated in FIG. 7B.

More specifically, the vehicle detection unit 104 determines whether a preceding vehicle is the target vehicle FV when the preceding vehicle is detected under the "predetermined relative driving start condition", and recognizes the preceding vehicle as the target vehicle FV in response to determining that the preceding vehicle is the target vehicle FV The mode change unit 106 changes the "autonomous driving mode" to the "relative driving mode".

In response to determining that the preceding vehicle is not the target vehicle FV, the "predetermined relative driving start condition" is not satisfied even when the preceding vehicle is detected, and thus the mode change unit 106 does not change the mode.

Here, the "target vehicle FV" is a vehicle that has a vehicle ID registered in advance by the vehicle travel control device 1 (the storage unit 100) mounted on the host vehicle V and is identified by the vehicle ID. When the vehicle ID is set for the preceding vehicle, the "predetermined relative driving start condition" is satisfied, and when the vehicle ID is not set, the condition is not satisfied.

Specifically, when the target vehicle FV is detected in a case where the autonomous driving control is performed in the state where the "autonomous driving mode" is set, the mode change unit 106 sets the "relative driving mode" in the state where the "autonomous driving mode" is set. In other words, the "relative driving mode" is switched from an enabled state to a disabled state while the "autonomous driving mode" is switched to an enabled state.

At this time, the mode change unit 106 preferentially continues the "autonomous driving mode" in a state where both modes are set. That is, the driving control unit 103 continuously performs the autonomous driving control.

When the target vehicle information of the target vehicle FV is obtained in a case where the autonomous driving control continues in the state where both modes are set, the mode change unit 106 preferentially performs the "relative driving mode" in the state where both modes are set. That is, the driving control unit 103 newly performs the relative driving control.

When the target vehicle information of the target vehicle FV is not obtained in the case where the autonomous driving control continues in the state where both modes are set, that is, when the wireless communication with the vehicle information transmission device 50 mounted on the target vehicle FV is not possible, the mode change unit 106 returns the "relative driving mode" set once to an unset state. In other words, the "relative driving mode" is returned from an enabled state to a disabled state. At this time, since the "autonomous driving mode" remains set (the enabled state), the driving control unit 103 continues to perform the autonomous driving control.

### «Relative Driving Control»

The driving control unit 103 controls the integrated ECU 31 based on the "environment information", the "position information of the host vehicle V", and the "target vehicle information of the target vehicle FV", and performs the "relative driving control" of the host vehicle V relative to the target vehicle FV (see FIG. 7B).

The driving control unit 103 can perform suitable relative driving according to a type of the target vehicle FV (a shape or size, traveling performance, fuel consumption, an exhaust amount, and the like) by further combining the "vehicle identification information of the target vehicle FV" obtained from the recognition result of the identification marks 60 and controlling the integrated ECU 31 to perform the "relative driving control".

The "relative driving control" performed by the driving control unit 103 is a control process of specifying, based on the "position information of the target vehicle FV" included in the target vehicle information acquired from the target vehicle FV, position information on which the host vehicle V travels on a travel trajectory (a past travel route) drawn based on the position information of the target vehicle FV In the relative driving control, in order to appropriately secure an inter-vehicle distance between the host vehicle V and the target vehicle FV on the travel trajectory, control of traveling predetermined position information with a setting inter-vehicle distance according to a travel speed of the host vehicle V is performed.

Specifically, the travel speed acquisition unit 107 acquires the "angular velocity and acceleration information" of the host vehicle V from the inertial measurement unit 22, and acquires the "travel speed" of the host vehicle V in real time by integrating the acceleration and the angular velocity.

The driving control unit 103 specifies position information on which the host vehicle V travels based on the position information of the target vehicle FV with reference to the "inter-vehicle distance data" illustrated in FIG. 8 stored in the storage unit 100, and performs relative driving control for causing the host vehicle V to travel relative to the target vehicle FV based on the position information of the host vehicle V and the environment information.

In the relative driving control, a process of correcting the position information specified based on the position information of the target vehicle FV and correcting the trajectory based on the "position information of the host vehicle V" such that the host vehicle V actually travels. That is, the process is a process of correcting a deviation (error) between the position information on a position where the host vehicle travels and the position information on a position where the host vehicle actually travels, which are specified based on the position information on the target vehicle FV, and correcting the trajectory.

Accordingly, a travel trajectory along which the host vehicle V actually travels (a travel trajectory based on the position information of the host vehicle V) is stored in the storage unit 100.

The "inter-vehicle distance data" illustrated in FIG. 8 is a data table indicating a correspondence relation between the travel speed of the host vehicle V and the setting inter-vehicle distance.

For example, when the travel speed (an average travel speed) of the host vehicle V is "80 km/h", the setting inter-vehicle distance between the host vehicle V and the target vehicle FV is set to "40 m to 70 m".

The "inter-vehicle distance data" may be graph data in which the travel speed of the host vehicle V is taken as an X-axis, the setting inter-vehicle distance is taken as a Y-axis, and the setting inter-vehicle distance increases in proportion to the travel speed (increases quadratically).

In addition to setting the inter-vehicle distance to the target vehicle FV as described above, a time interval may be set such that the target vehicle FV travels at a position a predetermined time before (for example, several seconds before). In this case, a minimum inter-vehicle distance may be set such that the host vehicle V does not collide with the target vehicle FV

In order to calculate the "travel speed" of the host vehicle V, the travel speed acquisition unit 107 may calculate a "speed" of the host vehicle V by processing the "GNSS information (the GNSS correction information)" and the "acceleration and angular velocity information" using a Kerman filter. Thus, the "travel speed" can be calculated more accurately.

In order to acquire the "speed information" of the host vehicle V, a wheel speed sensor may be newly mounted on the host vehicle V, and the "speed information" may be acquired through the wheel speed sensor.

Although the driving control unit 103 performs the relative driving control at a setting inter-vehicle distance according to the travel speed of the host vehicle V, the driving control unit 103 may perform the relative driving control of the host vehicle V relative to the target vehicle FV in a synchronous state between the host vehicle V and the target vehicle FV (for example, a state where the host vehicle V also travels "1 m" when the target vehicle FV travels "1 m").

In the case of the synchronous state, the driving control unit 103 may acquire the environment information around the host vehicle V, the position information of the host vehicle V, and the target vehicle information including the position information of the target vehicle FV in real time, and combine these pieces of information to perform the relative driving control.

### <<Mode Change (Relative Driving → Autonomous Driving)>>

### (When Target Vehicle Performs Stop Operation)

When the "predetermined condition according to the travel state" of the target vehicle FV is satisfied in a case where the relative driving control is performed in the state where the "relative driving mode" is set as illustrated in FIG. 7B, the mode change unit 106 changes the relative driving mode to the "autonomous driving mode". The driving control unit 103 performs autonomous driving control in the "autonomous driving mode" as illustrated in FIG. 7C.

The "predetermined condition according to the travel state" is a case where, in order for the host vehicle V to travel efficiently, it is detected from the behavior of the target vehicle FV that it is necessary for the host vehicle V to overtake the target vehicle FV, or it is necessary to travel along a route different from that of the target vehicle FV

The "predetermined condition according to the travel state" is, for example, a case where it is detected from the behavior of the target vehicle FV that the traveling target vehicle FV performs a stop operation on a roadside (a roadside zone) or starts the stop operation.

Further, the "predetermined condition according to the travel state" is, for example, a case where it is detected from the behavior of the target vehicle FV that the traveling target vehicle FV starts traveling on a route (specifically, a route toward a rest area) different from the scheduled travel route.

That is, the "predetermined condition according to the travel state" can also be referred to as a "relative driving release condition" for releasing the relative driving control of the host vehicle V

Hereinafter, as illustrated in FIG. 7C, a case where the traveling target vehicle FV performs a stop operation on the roadside will be described.

In a case where the relative driving control is performed in the state where the "relative driving mode" is set as illustrated in FIG. 7B, the environment information acquisition unit 101 detects that the target vehicle FV performs a stop operation on a roadside (starts the stop operation) as detection information related to the travel state of the target vehicle FV

The mode change unit 106 determines that the predetermined condition is satisfied when it is detected that the target vehicle FV performs a stop operation at a roadside based on a detection result of the environment information acquisition unit 101 as the predetermined condition according to the travel state of the target vehicle FV The "relative driving mode" is changed to the "autonomous driving mode".

Thee driving control unit 103 performs autonomous driving control in the "autonomous driving mode". Specifically, the autonomous driving control of the host vehicle V is performed to overtake the target vehicle FV as illustrated in FIG. 7C while grasping the traveling environment information around the host vehicle V

Since the "autonomous driving mode" remains set to a normal state (an enabled state), the driving control unit 103 can smoothly shift from the relative driving control to the autonomous driving control.

### (When Target Vehicle is separated at Branch Point)

In addition to the above conditions, when a predetermined condition according to the scheduled travel route of the target vehicle FV is satisfied in a case where the relative driving control is performed in the state where the "relative driving mode" is set, the mode change unit 106 changes the relative driving mode to the "autonomous driving mode". Thee driving control unit 103 performs autonomous driving control in the "autonomous driving mode".

The "predetermined condition according to the scheduled travel route" is a case where it is detected that the scheduled travel route of the target vehicle FV and the scheduled travel route of the host vehicle V do not match.

For example, it is assumed that the scheduled travel route of the target vehicle FV is acquired in advance and the scheduled travel routes are not matched, or the scheduled travel route of the target vehicle FV is changed and the changed scheduled travel routes are not matched.

Hereinafter, a case where the target vehicle FV and the host vehicle V are separated at a branch point will be described.

The communication unit 105 receives the "target vehicle information" including the position information of the target vehicle FV and the scheduled travel route information from the vehicle information transmission device 50.

In a case where the relative driving control is performed in the state where the "relative driving mode" is set as illustrated in FIG. 7B, when it is detected that both of the scheduled travel routes do not match based on the target vehicle information obtained by the communication unit 105, the mode change unit 106 regards that the "predetermined condition according to the travel state" is satisfied. The relative driving mode is changed to the "autonomous driving mode".

Thee driving control unit 103 performs autonomous driving control in the "autonomous driving mode". Specifically, the autonomous driving control of the host vehicle V is started separately from the target vehicle FV at a predetermined branch point.

With the above configuration, it is possible to realize the vehicle travel control device 1 in which the host vehicle V can travel relative to the target vehicle FV and the driving state of the host vehicle V can be changed as necessary.

In addition, by using the vehicle travel control device 1, it is possible to receive the position information of the target vehicle FV in real time and switch between the "autonomous driving control" and the "relative driving control" according to the behavior (a change in the travel state) of the target vehicle FV

### <<Remote Driving Control>>

Next, "remote driving control" will be described.

The video processing unit 108 acquires external video data of the host vehicle V from the plurality of image capturing devices 11a to 11i, and generates a synthesized video (synthesized video data) obtained by synthesizing the external videos based on the predetermined layout information.

By generating the synthesized video and transmitting the generated synthesized video data to the remote control device 70, a data communication cost can be reduced as compared with a case of transmitting a plurality of pieces of external video data.

The communication unit 105 performs transmission and reception of data between the vehicle travel control device 1 and the remote control device 70 using the in-vehicle communication device 40.

Specifically, the communication unit 105 transmits the "environment information" obtained by the environment information acquisition unit 101 and the "current position information" obtained by the position information acquisition unit 102 to the remote control device 70 as information required for the "remote driving" of the host vehicle V

The communication unit 105 receives the "driving operation information" of the host vehicle V from the remote control device 70 that receives the user input by the operator.

The driving control unit 103 controls the integrated ECU 31 based on the "driving operation information" of the host vehicle V acquired from the remote control device 70, and performs the "remote driving control" of the host vehicle V

With the above configuration, it is possible to realize the vehicle travel control device 1 capable of performing "remote driving control" in which the operator remotely operates the host vehicle V to cause the host vehicle V to travel.

Therefore, it is also possible to switch between the "remote driving control" and the "relative driving control" according to the behavior of the target vehicle FV When the "remote driving control" is switched to the "relative driving control", the operator is released from an operation of the relative driving of the host vehicle V

### «Vehicle Travel Control Method»

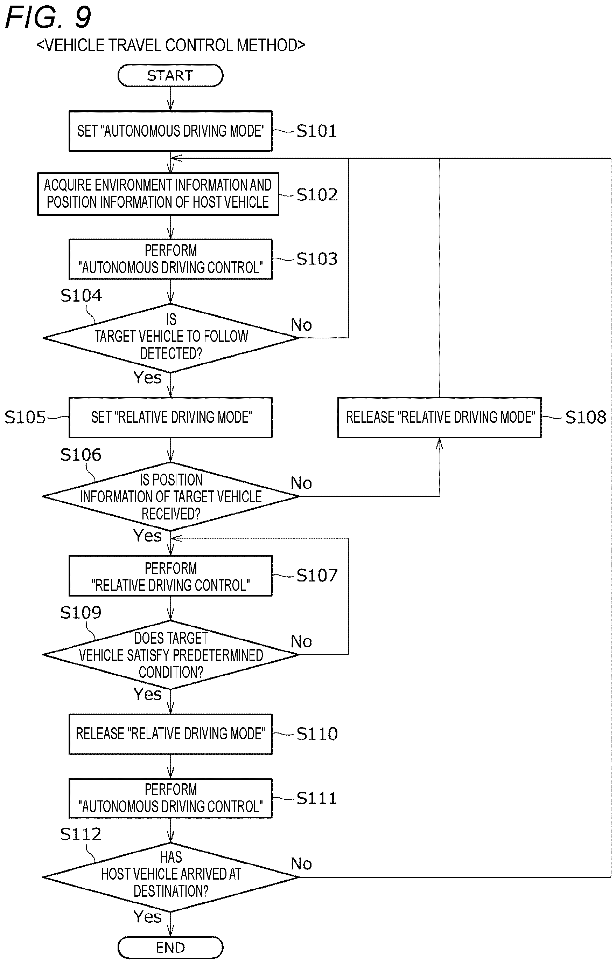

Next, an example of a process of a vehicle travel control program (a vehicle travel control method) executed by the vehicle travel control system S1 will be described with reference to FIG. 9.

The program according to the present embodiment is a program for realizing the environment information acquisition unit 101, the position information acquisition unit 102, the driving control unit 103 (a travel control unit), the vehicle detection unit 104, the communication unit 105, the mode change unit 106, the travel speed acquisition unit 107, and the video processing unit 108 described above as functional components of the vehicle travel control device 1 including the storage unit 100, and a CPU of the vehicle travel control device 1 executes the vehicle travel control program.

The program is executed by receiving an operation instruction from a user (specifically, a driver of the host vehicle V or an external operator).

In a vehicle travel control flow illustrated in FIG. 9, first, the vehicle travel control device 1 starts from step S101 in which the "autonomous driving mode" is set when the host vehicle V starts traveling.

The vehicle travel control device 1 may set a "remote operation driving mode" instead of the "autonomous driving mode".

When the "remote operation driving mode" is temporarily set, the driving control unit 103 performs remote operation driving control of the host vehicle V in step S103 to be described later.

Next, in step S102, the environment information acquisition unit 101 starts acquiring the "environment information" around the host vehicle V, and the position information acquisition unit 102 starts acquiring the "position information of the host vehicle V". The position information acquisition unit 102 acquire the "position information of the host vehicle V" by a "current position information acquisition process" illustrated in FIG. 6.

In step S103, the driving control unit 103 controls the integrated ECU 31 based on the environment information and the position information of the host vehicle V, and performs the "autonomous driving control" of the host vehicle V (see FIG. 7A).

Next, in step S104, the vehicle detection unit 104 detects whether a predetermined preceding vehicle is the target vehicle FV to follow on the scheduled travel route of the host vehicle V

Specifically, the vehicle detection unit 104 determines, based on the predetermined relative driving start condition, whether the preceding vehicle is the target vehicle FV based on recognition results of the identification marks 60 of the predetermined preceding vehicle recognized by the image capturing devices 11.

When the vehicle detection unit 104 determines that the preceding vehicle is the target vehicle FV by satisfying a predetermined relative driving start condition (step S104: Yes), the process proceeds to step S105. On the other hand, when the vehicle detection unit 104 does not determine that the predetermined relative driving start condition is not satisfied and the preceding vehicle is the target vehicle FV (step S104: No), the process returns to step S102. That is, the autonomous driving control in the "autonomous driving mode" is continued.

Next, in step S105, the mode change unit 106 sets the "relative driving mode" in a state where the "autonomous driving mode" is set. In other words, the "relative driving mode" is changed from the disabled state to the enabled state while the "autonomous driving mode" is set to the enabled state.

Next, in step S106, the communication unit 105 attempts to receive the "target vehicle information" including the "position information of the target vehicle FV" detected by the vehicle detection unit 104.

Specifically, the communication unit 105 starts communication with the vehicle information transmission device 50 mounted on the target vehicle FV via a network and attempts to receive the position information of the target vehicle FV from the vehicle information transmission device 50.

When the communication unit 105 receives the position information of the target vehicle FV from the target vehicle FV (step S106: Yes), the process proceeds to step S107. The driving control unit 103 controls the integrated ECU 31 based on the "environment information", the "position information of the host vehicle V", and the "target vehicle information of the target vehicle FV", and performs the "relative driving control" of the host vehicle V relative to the target vehicle FV (see FIG. 7B).

On the other hand, when the communication unit 105 does not receive the position information of the target vehicle FV (step S106: No), the process proceeds to step S108. The mode change unit 106 changes the "relative driving mode" from the enabled state to the disabled state and releases the "relative driving mode" in a state where the "autonomous driving mode" is set, and the process returns to step S102.

Next, in step S109, the mode change unit 106 determines whether the target vehicle FV satisfies the "predetermined condition" in a case where the relative driving control is performed in the state where the "relative driving mode" is set.

Specifically, the mode change unit 106 determines whether the target vehicle FV satisfies the "predetermined condition according to the travel state" or whether the target vehicle FV satisfies the "predetermined condition according to the scheduled travel route".

In response to determining that either the "predetermined condition according to the travel state" or the "predetermined condition according to the scheduled travel route" of the target vehicle FV is satisfied, the mode change unit 106 determines that the "predetermined condition" is satisfied.

In response to determining that the target vehicle FV satisfies the "predetermined condition" (step S109: Yes), the process proceeds to step S110, and the mode change unit 106 changes the "relative driving mode" from the enabled state to the disabled state and releases the mode.

In step S111, the driving control unit 103 performs autonomous driving control in the "autonomous driving mode" as illustrated in FIG. 7C.

For example, when the "predetermined condition according to the travel state" is satisfied by detecting that the traveling target vehicle FV performs a stop operation, the mode change unit 106 releases the "relative driving mode", and the driving control unit 103 switches the relative driving control to perform the autonomous driving control.

On the other hand, in response to determining that the target vehicle FV does not satisfy the "predetermined condition" (step S109: NO), the process returns to step S107.

Finally, at step S112, when the vehicle travel control device 1 determines that the host vehicle V arrives at a destination or the autonomous driving control according to the autonomous driving mode is to be ended (step S112: Yes), the process of FIG. 9 is ended.

On the other hand, when the vehicle travel control device 1 continues to perform the driving control of the host vehicle V (step S112: NO), the process returns to step S102.

With a configuration of the vehicle travel control program, the host vehicle V can travel relative to the target vehicle FV, and a driving state of the host vehicle V can be changed as necessary.

Further, it is possible to receive the position information of the target vehicle FV in real time and switch between the "autonomous driving control" and the "relative driving control" according to the behavior of the target vehicle FV

### «Vehicle Management System»

By using the vehicle travel control system S 1, a plurality of host vehicles V find the target vehicle FV to follow, and the switching of the "autonomous driving control" and the "relative driving control" is repeated to form a plurality of platoons (vehicle groups) including a plurality of vehicles. The platoon at this time can be recognized as being formed in an outer shape by "autonomous driving control" and "relative driving control" between the vehicles.

When a plurality of platoons having close destinations, routes to a destination, and travel speeds are traveling, labor saving and improvement of fuel consumption can be expected by merging the platoons.

Hereinafter, the vehicle management device 80 and the vehicle management system S that control a plurality of platoons F formed by the vehicle travel control system S 1 and connect the platoons will be described with reference to FIGS. 1 and 10 to 17.

In the vehicle travel control system S 1, the functions of the host vehicle V and the target vehicle FV are separately described, and it is assumed that each vehicle C forming the platoon F also has a function in which the host vehicle V serves as the target vehicle FV That is, the vehicle C controlled by the vehicle management system S includes the vehicle travel control device 1, the in-vehicle sensor 10, the in-vehicle locator 20, the in-vehicle ECU 30, and the in-vehicle communication device 40, and includes the vehicle information transmission device 50 and the identification mark 60. Accordingly, it is also possible to switch the host vehicle V and the target vehicle FV to each other and continue traveling. Hereinafter, a case where the host vehicle V having a function of the target vehicle FV serves as the vehicle C will be described.

The vehicle C automatically identifies the target vehicle FV and follows the target vehicle FV by the vehicle travel control system S 1, and the driver may directly specify a vehicle to follow and follow the vehicle. For example, the vehicle information is received from a vehicle that travels around the vehicle C, and the driver specifies a vehicle to follow based on vehicle information displayed on a display provided in the vehicle C. In this case, it is also possible to prohibit following or call attention based on a difference in a vehicle size class or information on the scheduled travel route of the vehicle.

It is also possible to set in advance whether each vehicle C performs follow-up driving. Whether to perform the follow-up driving (ON/OFF) can be manually set. Further, whether to perform the follow-up driving can be automatically set by the vehicle travel control device 1 determining a type and weight of a package loaded on the vehicle C by registering information on the package by the driver.

### <<Hardware Configuration of Vehicle Management Device>>

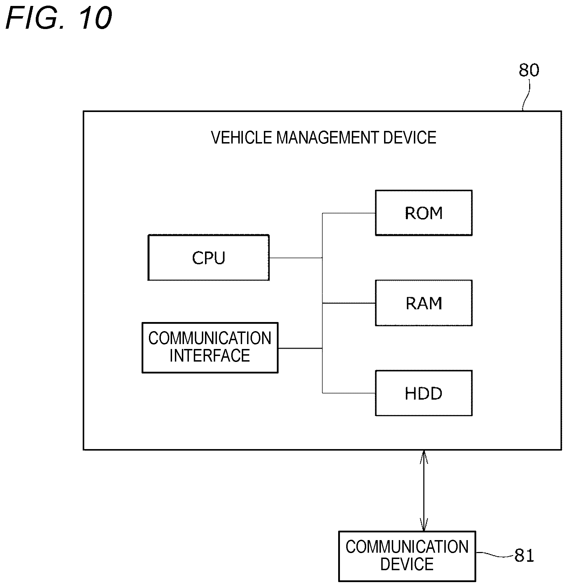

As illustrated in FIG. 1, the vehicle management device 80 is a computer for managing the traveling of a group of platoons F formed by a plurality of vehicles C. As illustrated in FIG. 10, the vehicle management device 80 includes a CPU serving as a data calculation and control device, and a communication interface that transmits and receives information data to and from a ROM, a RAM, and an HDD (SSD) serving as a storage device via a network. Further, the vehicle management device 80 includes a communication device 81 that communicates with an external device.

The storage device of the vehicle management device 80 stores a vehicle management program in addition to a main program that performs necessary functions as a computer. By executing these programs by the CPU, the functions of the vehicle management device 80 are exhibited.

### <Function of Vehicle Management Device>

From the viewpoint of functions described with reference to FIG. 10, the vehicle management device 80 includes, as main components, a storage unit 800 that stores various programs and various data, a communication unit 801 (a second communication unit) that transmits and receives various data to and from the vehicle travel control device 1 of the vehicle C, a management unit 802 that manages a travel state of each vehicle C subjected to travel control by the vehicle travel control device 1 based on position information of the vehicle C acquired through communication with the vehicle travel control device 1 of the vehicle C, and a state control unit 803 that controls the travel state of the vehicle C managed by the management unit 802.

The state control unit 803 includes a determination unit 804, a decision unit 805, an instruction unit 806, and a connection control unit 807. The determination unit 804 determines whether connection between the platoons F is permitted based on the travel state of the vehicle C. The decision unit 805 decides a connection mode between the platoons F based on the determination result of the determination unit 804. The instruction unit 806 transmits information on the connection mode decided by the decision unit 805 to the leading vehicle Ct of each platoon F. The connection control unit 807 controls connection between the platoons F through communication with the leading vehicle Ct instructed by the instruction unit 806.

These components are implemented by a CPU, a ROM, a RAM, an HDD, a communication interface, various programs, and the like illustrated in FIG. 10.

Hereinafter, each function of the vehicle management device 80 will be described in detail. The vehicle management device 80 provides the vehicles with information required for determination of whether the group of platoons F can be connected, connection permission, management of the connection state, and connection, and is implemented by functions to be described below. In view of appearance, in the vehicle management system S according to the present embodiment, the vehicles are connected to each other in the form of a platoon, but each vehicle C actually performs driving control such as automated driving or follow-up driving to form a group of platoons, and the vehicle management device 80 does not directly issue an instruction to each vehicle C to form the platoon F.

### <Communication Unit>

The communication unit 801 communicates with the communication unit 105 (a first communication unit) of the vehicle travel control device 1 included in each of the vehicles C forming the platoon F, and receives the "current position information" transmitted by the communication unit 105. The communication unit 801 receives the "current position information" of the vehicle C and stores the information in the storage unit 800. The communication unit 801 may further acquire "vehicle information" from the vehicle C. The "vehicle information" includes information such as: identification information (a vehicle ID) of the vehicle C; a vehicle type; a vehicle size class; and a full width, a full height, a full length, an engine displacement (an output of a motor), passenger capacity, and a weight of the vehicle, which are recorded in a vehicle inspection certificate.

The "vehicle information" may include information such as a destination that does not change during operation but changes for each operation, a scheduled travel route to the destination, the content and weight of loading, and the number of passengers.

The "vehicle information" may include information that changes during traveling, for example, a driving mode (an autonomous driving mode or a remote driving operation mode), images of a host vehicle captured by the image capturing devices 11 mounted on the vehicle C, information on remaining fuel, and information on a target vehicle to follow.

As the "vehicle information", failure information (disconnection of wiring of an electronic circuit, abnormal signals from various sensors, and the like) detected by an on-board diagnostics device (OBD) mounted on the vehicle C may be acquired.

Hereinafter, the "current position information" and the "vehicle information" received from each vehicle C are collectively referred to as "travel information".

In addition, the communication unit 801 can perform information communication with an external server (not illustrated) and receive the latest traffic information, weather information, and the like (hereinafter, "external factor information") from the external server, for example.

The "travel information" and the "external factor information" received by the communication unit 801 are stored in the storage unit 800.

### <Management Unit>

The management unit 802 of the vehicle management device 80 manages a travel state of the vehicle C based on the "current position information" received by the communication unit 801. Specifically, the management unit 802 manages information on a traveling operation, an acceleration operation, a deceleration operation, a stop operation, a left turn operation, a right turn operation, a backward movement operation, and the like at a constant speed according to the vehicle C, in other words, behavior information (information based on a behavior) of the vehicle C.

By using the communication unit 801 to acquire the "current position information" of the vehicle C in real time, the management unit 802 can detect, for example, that the traveling vehicle C stops, that the stopping vehicle C starts traveling, and that the vehicle C starts traveling on a route different from the scheduled travel route, based on a change in information on the travel state of the vehicle C (a change in the behavior information).

The management unit 802 manages "platoon information" on the platoon F. The "platoon information" is information indicating a state of the platoon F, and includes types of vehicles C constituting the platoon, identification information, the number of vehicles C constituting the platoon, and the like. The management unit 802 may calculate a length of the platoon F or a distance between vehicles using the received "current position information" or the like of the vehicles C and manage the calculated length and distance as the platoon information. In addition, information on the leading vehicle Ct of the platoon F, identification information, a driving mode, a destination, a scheduled travel route, and the like may be included.

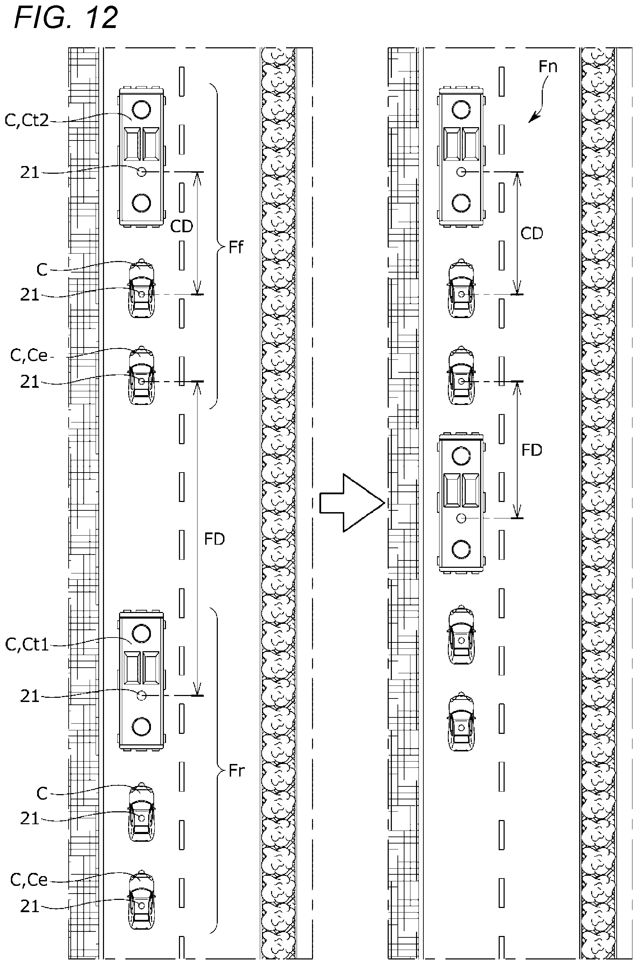

Whether the vehicle C belongs to the platoon F is determined based on whether a distance CD (see FIG. 12) between GNSS receivers 21 mounted on the vehicle C (the leading vehicle Ct2) traveling ahead and the vehicle C traveling behind is within a predetermined distance D according to the travel speed. The predetermined distance D is set to, for example, an inter-vehicle distance × 1.5 according to the travel speed.

A distance FD (see FIG. 12) between the platoon F traveling ahead and the platoon F traveling behind is calculated from a difference between a position of the GNSS receiver 21 of a rearmost vehicle Ce (a rearmost vehicle) of a front platoon Ff (a second platoon) traveling ahead and a position of the GNSS receiver 21 of the leading vehicle Ct1 of a rear platoon Fr (a first platoon) traveling behind the front platoon Ff. The position (the current position information) of the GNSS receiver 21 may be specified using the IMU information and the RTK positioning method.

The management unit 802 may manage "platoon information" on the platoon F and transmit the "platoon information" to the vehicles C constituting the platoon F. Each of the vehicles C can recognize, based on the received "platoon information", that the platoon F is formed and at which position (in order within the platoon) the host vehicle is traveling within the entire platoon F. For example, it is possible to grasp whether the host vehicle is the leading vehicle Ct of the platoon F, whether the host vehicle is an intermediate vehicle traveling in the platoon, what number the host vehicle travels from the leading vehicle Ct, and whether the host vehicle is the rearmost vehicle Ce.

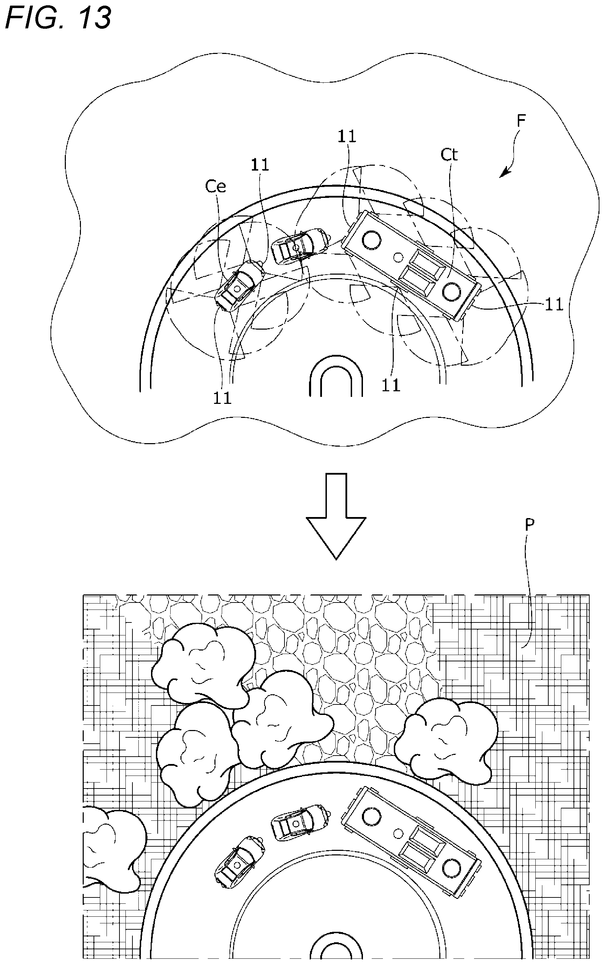

The management unit 802 may generate, based on image information received from the vehicles C constituting the platoon F, a video referred to by an operator who remotely operates the leading vehicle Ct. The video to be referred to is preferably a video from which the travel state of the entire platoon F can be grasped. For example, as illustrated in FIG. 13, image information from the image capturing devices 11 mounted on the leading vehicle Ct and the rearmost vehicle Ce of the platoon F is acquired to generate a synthesized image P (a platoon image, a synthesized video). At this time, in order to reduce an amount of data to be transmitted and received, it is preferable not to use image information from an intermediate vehicle in a platoon.

### <Storage Unit>

The storage unit 800 stores the "travel information" and the "external factor information" received by the communication unit 801 as described above, and the "platoon information" managed by the management unit 802.

In addition, the storage unit 800 stores a "connection method" for connecting platoons based on the "travel information". As the "connection method", for example, there is a method in which, when the front platoon Ff reduces a travel speed and the rear platoon Fr increases a travel speed, an interval between platoons is reduced, and thereafter, when the interval is equal to or less than a constant interval, the vehicle C of the front platoon Ff and the vehicle C of the rear platoon Fr travel at the same travel speed.

The storage unit 800 also registers a driving mode of the leading vehicle Ct of the platoon F according to the "connection method".

The storage unit 800 stores, as a "platoon connection prohibition condition", a condition for not performing platoon connection used when the determination unit 804 determines whether connection between platoons is permitted.

Examples of the "platoon connection prohibition condition" include the following conditions.

### <Prohibition Condition according to External Factor Information>

(1) When a road to be traveled is congested.
(2) When a risk condition due to the climate is satisfied, for example, snow or rain is falling.

Whether the road is congested is determined based on traffic information received from an external server, information on the climate information may be determined based on the information received from the external server or may be determined based on the environment information acquired from the vehicle C.

### <Prohibition Condition according to Travel information and Platoon information>

(3) When the distance FD between platoons is equal to or larger than a predetermined distance.
(4) When arrival times to a destination are significantly different.
(5) When a speed difference between the platoons is larger than a threshold value.
(6) When scheduled travel routes of the platoons are different.
(7) When there is a scheduled travel route common to platoons, but the remaining common scheduled travel route is shorter than a predetermined distance.
(8) When a load capacity or a vehicle weight included in the vehicle information exceeds a certain value.
(9) When the vehicle C of the platoon F does not correspond to the vehicle information set in a connection controllable segment.

The "connection controllable segment" is a segment in which permission or rejection of the connection is set based on the platoon information and the vehicle information of the vehicles C constituting the platoon. For example, conditions, such as a condition that the connection is permitted when a length of the platoon is 25 m or less and a vehicle size class is an ordinary vehicle, and a condition that the connection is permitted when a length of the platoon is 40 m or less, a vehicle size class is a heavy vehicle, and a total weight of the platoon is 60 t or less, are set for each segment. The connection controllable segment set on a road, the vehicle information set in the segment, and the like may be stored in the storage unit 800 in advance.

The state control unit 803 controls the travel state of the vehicle C managed by the management unit 802. As described above, the state control unit 803 includes the determination unit 804, the decision unit 805, the instruction unit 806, and the connection control unit 807.

The determination unit 804 determines whether connection between the platoons F is permitted based on the travel state of the vehicle C managed by the management unit 802.

The determination as to whether the connection is permitted is performed by first confirming whether the connection is permitted for the leading vehicle Ct of the platoon F requested to be connected. When the platoon F requested to be connected does not permit the connection, the leading vehicle Ct transmits a signal for rejecting the connection to the vehicle management device 80. In a case where the platoon F rejects the connection, for example, there is a case where a valuable item, a dangerous item, or the like is included in loading of some vehicles C.

When the platoon F requested to be connected permits the connection, the determination unit 804 determines whether the connection is permitted based on the travel state. Specifically, the vehicle management device 80 acquires the platoon F and the travel state (the travel information, the platoon information, and the external factor information) of each vehicle C, and determines that the travel state does not correspond to the "platoon connection prohibition condition" stored in the storage unit 800.

The decision unit 805 decides a connection mode between the platoons F based on the determination result of the determination unit 804. When the determination unit 804 determines that the connection of the platoons F is not permitted, the connection between the platoons F is cancelled. When the connection between the platoons F is permitted, an optimum connection method is selected and decided from connection methods stored in the storage unit 800 based on the travel state of each vehicle C, that is, the received "travel information", the "platoon information" and the "external factor information" stored in the storage unit 800.

The decision unit 805 also decides a driving mode of the leading vehicle Ct of each platoon F based on the decided connection method. A state of the platoon after the connection, the connection method, the set driving mode, and the like are referred to as a "connection mode".

The instruction unit 806 transmits information on the connection mode decided by the decision unit 805 to the leading vehicle Ct of each platoon F to be connected. The information on the connection mode is transmitted to instruct connection between the platoons F.

When the instruction unit 806 instructs the leading vehicle to perform connection, safety confirmation of an external factor may be performed from the travel information, and a connection start timing at which the connection is started may be transmitted. The leading vehicle Ct of each platoon F starts connection based on the received connection method.

The connection control unit 807 controls the connection between the platoons through communication with the leading vehicle Ct of each platoon F. When it is decided to cancel the connection during the connection, the leading vehicle Ct is controlled to release the connection.

Even after the connection is started, the vehicle management device 80 receives the travel information from the leading vehicle Ct of the platoon F in which the connection is started, and the determination unit 804 determines whether the connection proceeds normally based on the travel information.

For example, when a vehicle that is irrelevant to the platoon F cuts in between platoons, the platoons cannot be connected to each other, and thus the determination unit 804 determines to cancel the connection.

When the determination unit 804 determines to cancel the connection, the connection control unit 807 notifies the leading vehicle Ct of each platoon of connection cancellation. After the connection is released, each platoon F continues to travel while maintaining an original platoon. When it is not determined to cancel the connection, the connection between the platoons is completed.

### <Vehicle Management Program>

Next, an example of a process of a vehicle management program (a vehicle management method) executed by the vehicle management device 80 and the leading vehicle Ct of each platoon F in the vehicle management system S will be described with reference to FIGS. 12 to 17.

The program according to the present embodiment is a program for implementing the communication unit 801, the management unit 802, the state control unit 803, the determination unit 804, the decision unit 805, the instruction unit 806, and the connection control unit 807 described above as functional components of the vehicle management device 80 including the storage unit 800, and a CPU of the vehicle management device 80 executes the vehicle management program (the vehicle management method).

In order to describe a process of the vehicle management program, as illustrated in FIG. 12, an example is given as a more specific situation in which the rear platoon Fr (the first platoon) traveling behind the front platoon Ff (the second platoon) traveling ahead on the same road is connected to the front platoon Ff.

In addition, the vehicle management program mainly includes a "connection determination process" for determining whether connection between platoons is permitted, and a "platoon connection control process" for controlling connection between platoons when connection is permitted.

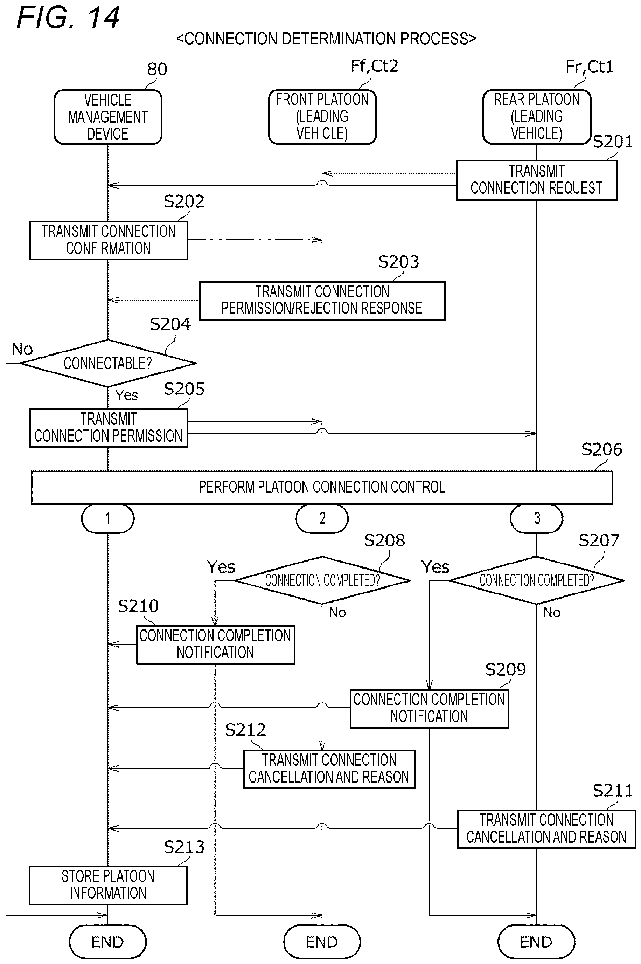

In the following description, first, the "connection determination process" for determining whether connection between platoons is permitted will be described with reference to a sequence diagram illustrated in FIG. 14, and then the "platoon connection control process" for connecting platoons will be described.

### <When Leading Vehicle of Rear Platoon is in Remote Driving Mode>

In order to describe an example of a process of the vehicle management program, it is assumed that the leading vehicle Ct2 of the front platoon Ff is in automated driving (an autonomous driving mode) and the leading vehicle Ct1 of the rear platoon Fr is driven by a remote operation (the remote driving mode).

In a "first communication process (a first communication step)", the leading vehicle Ct2 of the front platoon Ff and the leading vehicle Ct1 of the rear platoon Fr transmit and receive the travel information including the current position information between the vehicles C and transmit the travel information to the vehicle management device 80 before the start of the "connection determination process".

In a "second communication process (a second communication step)", the communication unit 801 of the vehicle management device 80 receives the travel information including the current position information and the like in real time from each of the vehicles C constituting the front platoon Ff and the rear platoon Fr before the start of the "connection determination process".

Further, each vehicle C performs travel control (a travel control step, a travel control process) of the vehicle based on the current position information specified in the position specification step.

The travel information of each vehicle C is stored in the storage unit 800, and the management unit 802 manages a "management process (a management step)" and manages that the plurality of vehicles C are in a travel state in which the plurality of vehicles C are traveling while forming the front platoon Ff or the rear platoon Fr.

In the "connection determination process" illustrated in FIG. 14, first, a connection request is transmitted from the leading vehicle Ct1 of the rear platoon Fr in the remote driving mode to the vehicle management device 80 and the leading vehicle Ct2 of the front platoon Ff (step S201). The connection request may be manually transmitted by an operator who remotely drives the leading vehicle Ct1 of the rear platoon Fr.

The connection request for connecting the platoons may be automatically transmitted when a connection enabling condition is satisfied, for example, when the leading vehicle Ct1 travels on a highway or when the leading vehicle Ct1 starts travelling on a predetermined road designated in advance. The connection request may be automatically transmitted on a condition that the leading vehicle Ct1 recognizes the identification mark 60 (an QR code (registered trademark)) in a rear vehicle Cr of the platoon F desired to be connected.

The communication unit 801 of the vehicle management device 80 and the leading vehicle Ct2 of the front platoon Ff receive the connection request. The vehicle management device 80 transmits, to the leading vehicle Ct2 of the front platoon Ff, a connection confirmation for confirming whether connection is permitted (step S202).

The leading vehicle Ct2 of the front platoon Ff receives the connection confirmation from the vehicle management device 80 and transmits a connection permission/rejection response indicating whether the connection is permitted (step S203).

In some cases, the front platoon Ff rejects the connection with another platoon while traveling in a platoon. For example, when the loaded package is a valuable item, the front platoon Ff may not desire to connect to another platoon. When the connection with the other platoon is prohibited, the leading vehicle Ct2 of the front platoon Ff transmits, to the vehicle management device 80, a signal indicating that the connection is not permitted. When the front platoon Ff may be connected to another platoon F, the leading vehicle Ct2 of the front platoon Ff transmits, to the vehicle management device 80, a signal indicating that the connection is permitted.

The communication unit 801 of the vehicle management device 80 receives the connection permission/rejection response from the leading vehicle Ct2 of the front platoon Ff, and the determination unit 804 determines whether to connect the front platoon Ff and the rear platoon Fr based on the connection permission/rejection response, the travel states of the vehicles C forming a platoon, and the like (a connection permission determination process (a determination process, a determination step): step S204). A process corresponding to a "state control process (a state control step)" according to the present invention is a "connection permission determination process (a determination process, a determination step)", "a decision process (a decision step)", "an instruction process (an instruction step)", and "a platoon connection control process (a connection control process, a connection control step)".

### <Connection Permission Determination Process>

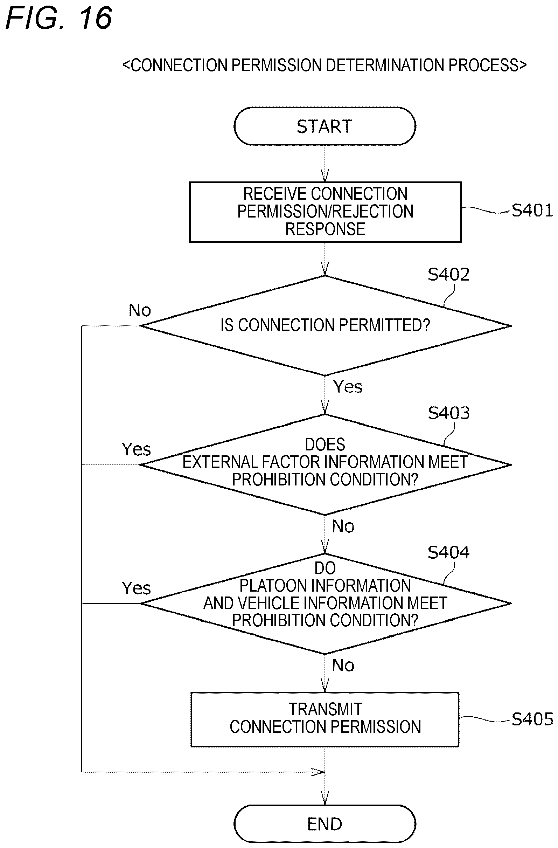

Here, the "connection permission determination process" executed in step S204 will be described in detail with reference to FIG. 16. The communication unit 801 of the vehicle management device 80 receives a connection permission response (an approval response) from the leading vehicle Ct2 of the front platoon Ff that has transmitted the connection confirmation (step S401).

The determination unit 804 confirms the received connection permission/rejection response (step S402). When the connection permission/rejection response indicates that the connection is not permitted (step S402: No), the connection between the platoons is not permitted, and the process ends. At this time, a fact that the connection is not permitted together with the reason may be transmitted to the leading vehicle Ct1 of the rear platoon Fr.

When the connection permission/rejection response from the front platoon Ff indicates that the connection is permitted (step S402: Yes), the determination unit 804 determines whether the external factor information corresponds to the "platoon connection prohibition condition" stored in the storage unit 800 (step S403). For example, in a case where the scheduled travel route is congested or the snow or the rain falls, when the platoons are connected to each other, it may be rather dangerous, and thus the connection between the platoons is not permitted, and the process ends (step S403: Yes).

In step S403, when the external factor information does not correspond to the "platoon connection prohibition condition" (step S403: No), the determination unit 804 determines whether the platoon information of the front platoon Ff and the rear platoon Fr and the vehicle information of the vehicles C constituting the platoon correspond to the "platoon connection prohibition condition".

For example, when the scheduled travel routes are different, since the platoon information and the vehicle information correspond to "when scheduled travel routes of the platoons are different" of the platoon connection prohibition condition (6), it is determined that the connection is not permitted.

In step S404 of the "connection permission determination process", when the platoon information or the vehicle information corresponds to at least one "platoon connection prohibition condition" (step S404: Yes), the current platoon state is maintained without the connection. At this time, as in the case where the connection is not permitted in step S402, the vehicle management device 80 may transmit, to the leading vehicle Ct1 of the rear platoon Fr to which the connection request is transmitted, that the connection is not permitted together with the reason.

When the platoon information or the vehicle information does not correspond to any of the "platoon connection prohibition conditions" (step S404: No), the communication unit 801 of the vehicle management device 80 transmits "connection permission" to the leading vehicle Ct2 of the front platoon Ff and the leading vehicle Ct1 of the rear platoon Fr (step S405, step S205 of the connection determination process). Thereafter, the vehicle management device 80, the leading vehicle Ct2 of the front platoon Ff, and the leading vehicle Ct1 of the rear platoon Fr perform the "platoon connection control process" (step S206).

In the above-described "connection permission determination process", the determination of whether the external factor information corresponds to the "platoon connection prohibition condition" (step S403) is performed before the determination based on the platoon information or the vehicle information (step S404), and the determination based on platoon information or vehicle information may be performed before the determination based on external factor information.

### <Platoon Connection Control Process>

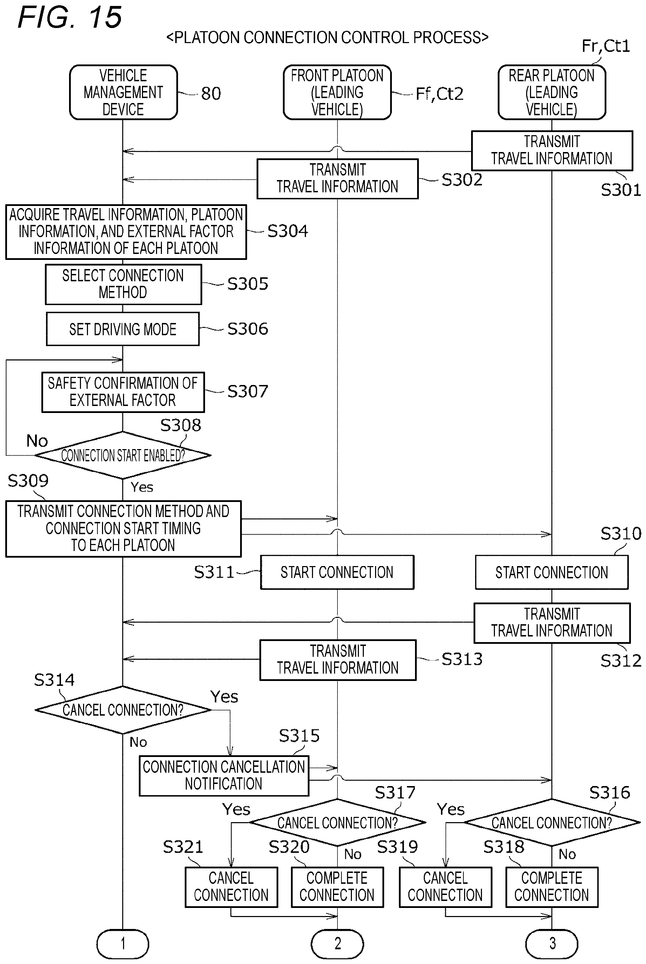

In step S204 of the connection determination process, when the connection between the front platoon Ff and the rear platoon Fr is permitted, the vehicle management device 80, the front platoon Ff, and the rear platoon Fr shift to a platoon connection control process (the connection control step) for actually connecting the platoons. Hereinafter, the "platoon connection control process" will be described with reference to FIG. 15.

When the platoons are connected to each other, in the "first communication process", the vehicles C constituting the front platoon Ff and the rear platoon Fr transmit the travel information of the host vehicle, particularly the current position information to the vehicle management device 80 in real time, and transmit the travel information even immediately after the "platoon connection control process" is started (steps S301 and S302).

When the connection is started, the vehicles C constituting the front platoon Ff and the rear platoon Fr may travel in a cooperative control mode. The cooperative control mode is a mode in which the vehicles C travel in cooperation as a vehicle group without separating from the platoon F individually. In other words, the cooperative control mode is a mode in which the vehicles C traveling behind the leading vehicle Ct are prohibited from freely departing from the platoon F. The cooperative control mode is performed until the connection between the platoons is terminated or the connection is determined to be cancelled.

The communication unit 801 of the vehicle management device 80 acquires travel information from the front platoon Ff and the rear platoon Fr, and stores the travel information in the storage unit 800 together with the platoon information. The external factor information is acquired from the external server and stored in the storage unit 800 (step S304).

Next, the decision unit 805 of the vehicle management device 80 decides a connection mode for connecting the platoons based on the acquired travel information (the decision process, the decision process). Specifically, an optimum connection method is selected and set from a plurality of connection methods stored in the storage unit 800 based on the travel information of the platoon (step S305).

In the connection method, information on a speed of each platoon at the time of connection, an interval between platoons, a vehicle interval, and the like are determined. As an example of the connection method, there is a method in which "a speed of the front platoon Ff is reduced, and a speed of the rear platoon Fr is increased to reduce an interval FD between platoons (see FIG. 12). Thereafter, when the interval FD between the front platoon Ff and the rear platoon Fr is equal to or less than a predetermined interval, both the front platoon Ff and the rear platoon Fr travel at the same speed.". In addition, as another connection method, there is a method in which "a speed of the front platoon is reduced and a speed of the rear platoon is increased to reduce an interval between platoons, and when the interval FD between platoons is wider than the vehicles C constituting the platoon, the vehicles C of the rear platoon are raised by a unit speed per hour from that state, and approach until the interval FD between platoons matches the vehicle interval".

After the decision unit 805 selects and sets a connection method in step S304, the decision unit 805 sets driving modes of the leading vehicle Ct2 of the front platoon Ff and the leading vehicle Ct1 of the rear platoon Fr based on the set connection method (step S306).

At this time, when the connection method selected by the decision unit 805 is a method for automatically controlling both the front platoon Ff and the rear platoon Fr, both the leading vehicle Ct2 of the front platoon Ff and the leading vehicle Ct1 of the rear platoon Fr are set to the "automated driving mode".

When the selected connection method is a method for automatically controlling only the rear platoon Fr, for example, a method for increasing only the speed of the rear platoon Fr, the leading vehicle Ct1 of the rear platoon Fr is set to the "automated driving mode" at least.

When the selected connection method is a method for automatically controlling only the front platoon Ff, for example, when only the speed of the front platoon Ff is reduced, the leading vehicle Ct2 of the front platoon Ff is set to the "automated driving mode" at least.

By setting the leading vehicle Ct of the platoon F to be controlled to the "automated driving mode", the platoons can be more safely connected to each other than when the leading vehicle Ct is set to the "remote driving mode".

Next, the decision unit 805 performs safety confirmation of the external factor before connection based on the acquired platoon information and travel information (step S307). Specifically, it is confirmed whether a road is a travel place on which the platoons can be connected and whether the weather is appropriate. At this time, an operator who remotely drives the leading vehicle Ct1 of the rear platoon Fr may perform safety confirmation by viewing a synthesized video of the platoon F illustrated in FIG. 13 displayed on a monitor.

The decision unit 805 decides whether the connection between platoons can be started in step S308 while performing safety confirmation. When a connection start condition is not satisfied due to the external factor (step S308: No), the process returns to step S307, and the safety confirmation of the external factor is continued. In step S308, when the connection start condition is satisfied, the connection method and the connection start timing selected by the decision unit 805 are transmitted to the leading vehicle Ct2 of the front platoon Ff and the leading vehicle Ct1 of the rear platoon Fr (step S309: an instruction process, an instruction process).

After receiving information on the connection method and the connection start timing from the vehicle management device 80, the leading vehicle Ct2 of the front platoon Ff and the leading vehicle Ct1 of the rear platoon Fr start the connection between platoons according to the received connection method (steps S310 and S311). At this time, when a driving mode is set in the connection method, the driving modes of the leading vehicle Ct2 of the front platoon Ff and the leading vehicle Ct1 of the rear platoon Fr are changed accordingly.

When the connection to the front platoon Ff is permitted by the vehicle management device 80 and the information on the connection method and the connection start timing are received, the leading vehicle Ct1 of the rear platoon Fr may confirm that the front platoon Ff is a target to be connected by recognizing the identification mark 60 (for example, an QR code (registered trademark), see FIG. 1) mounted on the rear vehicle Cr of the front platoon Ff.

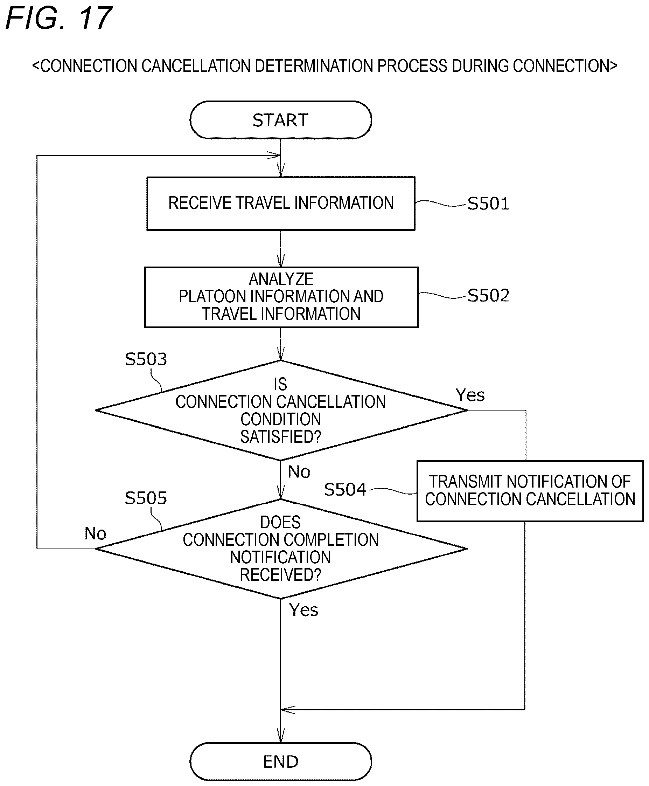

After the connection is started, each of the vehicles C constituting the front platoon Ff and the rear platoon Fr transmits the travel information to the vehicle management device 80 (steps S312 and S313). The vehicle management device 80 analyzes the travel information when the front platoon Ff and the rear platoon Fr are connected to each other, and determines whether to cancel (release) the connection between the platoons (step S314). The "connection cancellation determination process" during connection will be described with reference to the flowchart of FIG. 17.

The communication unit 801 of the vehicle management device 80 receives the travel information from each of the vehicles C constituting the front platoon Ff and the rear platoon Fr (step S501). The determination unit 804 analyzes the platoon information and the travel information (step S502). Next, the determination unit 804 determines whether a connection cancellation condition is satisfied. When the connection cancellation condition is satisfied (step S503: Yes), the leading vehicle Ct2 of the front platoon Ff and the leading vehicle Ct1 of the rear platoon Fr are notified of the connection cancellation (release of connection) (step S504).

The "connection cancellation condition" (a predetermined connection condition) is the same as the "platoon connection prohibition" used when determining whether connection between platoons is permitted, and for example, when there is a change in weather during the connection between platoons, and snow or rain falls, the connection between platoons is cancelled.

For example, when it is determined that the scheduled travel route common to the platoons is sufficiently long and a predetermined distance or more based on the scheduled travel route information of each platoon at a point in time when the connection is started, but it takes time to connect the platoons, and a distance (a platoon travel distance) of the common scheduled travel route after the connection is not the predetermined distance or more, the connection cancellation condition is satisfied, and thus the connection between the front platoon Ff and the rear platoon Fr is cancelled.

When the connection cancellation condition is not satisfied (step S503: No), the vehicle management device 80 confirms whether a connection completion notification is received from the leading vehicle Ct2 of the front platoon Ff and the leading vehicle Ct1 of the rear platoon Fr. When the connection completion notification is not received, since the connection is in progress, the process returns to step S501 and the "connection cancellation determination process" is continuously performed.

The determination unit 804 repeatedly performs the "connection cancellation determination process" until the connection completion notification is received from the leading vehicles Ct1 and Ct2.

Returning to FIG. 15. When the determination unit 804 of the vehicle management device 80 determines to cancel the connection between platoons in step S314 of the "platoon connection control process", the communication unit 801 transmits a connection cancellation notification to the leading vehicle Ct2 of the front platoon Ff and the leading vehicle Ct1 of the rear platoon Fr (step S315).

The leading vehicle Ct2 of the front platoon Ff and the leading vehicle Ct1 of the rear platoon Fr normally monitor whether the connection cancellation notification is received from the vehicle management device 80 during connection (steps S316 and S317), and when the connection cancellation notification is not received (steps S316 and S317: No), a connection operation between platoons is continued and the connection is completed (steps S318 and S320).

When the connection cancellation notification is received (steps S316 and S317: Yes), the connection operation between platoons is cancelled (steps S319 and S321).

The "platoon connection control process" ends when the connection between the front platoon Ff and the rear platoon Fr is completed or when the connection is determined to be cancelled.

The process returns to the "connection determination process" in FIG. 14. After the "platoon connection control process" ends, the leading vehicle Ct2 of the front platoon Ff and the leading vehicle Ct1 of the rear platoon Fr confirm whether the connection is completed (steps S207 and S208). When the connection between the front platoon Ff and the rear platoon Fr is completed (steps S207 and S208: Yes), the leading vehicle Ct2 of the front platoon Ff and the leading vehicle Ct1 of the rear platoon Fr transmit a connection completion notification to the vehicle management device 80 (steps S209 and S210).

After the communication unit 801 of the vehicle management device 80 receives the connection completion notification from the leading vehicle Ct2 of the front platoon Ff and the leading vehicle Ct1 of the rear platoon Fr, the management unit 802 receives the travel information from the vehicles C constituting a new platoon Fn after the connection. The management unit 802 generates platoon information from the travel information of each of the vehicles C constituting the new platoon Fn and stores (saves) the platoon information in the storage unit 800 (step S213). Thereafter, the management unit 802 manages the new platoon Fn after the connection.

The connection completion notification may be transmitted from either the leading vehicle Ct2 of the front platoon Ff or the leading vehicle Ct1 of the rear platoon Fr.

In the "platoon connection control process", when the connection between the front platoon Ff and the rear platoon Fr is cancelled (released) and the connection between the front platoon Ff and the rear platoon Fr is not completed (steps S207 and S208: No), the leading vehicle Ct2 of the front platoon Ff and the leading vehicle Ct1 of the rear platoon Fr transmit the connection cancellation and the reason thereof to the vehicle management device 80 (steps S211 and S212). At this time, the leading vehicle Ct2 of the front platoon Ff and the leading vehicle Ct1 of the rear platoon Fr also transmits notification that the front platoon Ff and the rear platoon Fr continue to travel independently.

The communication unit 801 of the vehicle management device 80 receives the connection cancellation and the reason thereof, and stores the information in the storage unit 800. The management unit 802 manages the front platoon Ff and the rear platoon Fr as platoons that travel independently.

### <When Leading Vehicle of Front Platoon is in Remote Driving Mode>

In the example of the connection determination process illustrated in FIG. 14, the leading vehicle Ct2 of the front platoon Ff is in the "automated driving mode", and the leading vehicle Ct1 of the rear platoon Fr is in the "remote driving mode". This is an example, and the leading vehicle Ct2 of the front platoon Ff may be driven in the "remote driving mode", and the leading vehicle Ct1 of the rear platoon Fr may be driven in the "automated driving mode".

In this case, when the "connection determination process" illustrated in FIG. 14 is started, the vehicle management device 80 first calculates the distance FD between platoons from the travel information of the front platoon Ff and the rear platoon Fr. When it is determined that the distance FD between platoons is shorter than a predetermined distance, the vehicle management device 80 transmits the connection confirmation to the leading vehicle Ct2 of the front platoon Ff.

When a connection enabling condition is satisfied, for example, when the leading vehicle Ct1 of the rear platoon Fr travels on a highway or when the leading vehicle Ct1 starts traveling on a predetermined road designated in advance, the leading vehicle Ct1 may automatically transmit a connection request to the vehicle management device 80 and the vehicle management device 80 may start the "connection determination process". The connection request may be automatically transmitted on a condition that the leading vehicle Ct1 of the rear platoon Fr in the automated driving mode recognizes the identification mark 60 mounted on the rear vehicle Cr of the front platoon Ff.

When an operator who remotely drives the leading vehicle Ct2 of the front platoon Ff receives the connection confirmation, the operator manually transmits a connection permission/rejection response to the vehicle management device 80, for example. When the connection permission/rejection is registered in advance in the leading vehicle Ct2, the connection permission/rejection response may be automatically transmitted to the vehicle management device 80.

When the connection is permitted, the vehicle management device 80 that receives the connection permission/rejection response from the leading vehicle Ct2 of the front platoon Ff performs the "connection permission determination process" of step S204 and determines whether the connection is permitted based on the external factor information, the travel information, and the like.

Thereafter, similarly to a case where the leading vehicle Ct1 of the rear platoon Fr is in the remote driving mode, a process of the connection permission transmission (step S205), a process of the "platoon connection control", and the like are performed, and the connection between the front platoon Ff and the rear platoon Fr is performed.

### <When Leading Vehicle of Each Platoon is Automated Driving>

Both the leading vehicles Ct1 and Ct2 of the front platoon Ff and the rear platoon Fr may be driven in the automated driving mode.

In this case, when the "connection determination process" illustrated in FIG. 14 is started, the vehicle management device 80 calculates the distance FD between platoons from the travel information of the front platoon Ff and the rear platoon Fr, and when it is determined that the distance FD between platoons is shorter than a predetermined distance (the platoons are close to each other), a connection confirmation transmission is transmitted to the leading vehicles Ct2 and Ct1 of both the platoons Ff and Fr.

When a connection enabling condition is satisfied, for example, when the leading vehicle Ct2 of the front platoon Ff or the leading vehicle Ct1 of the rear platoon Fr travels on a highway or when the leading vehicle Ct2 of the front platoon Ff or the leading vehicle Ct1 of the rear platoon Fr starts traveling on a predetermined road designated in advance, one of the leading vehicles Ct2 and Ct1 may automatically transmit a connection request to the vehicle management device 80, and the vehicle management device 80 may start the "connection determination process". The connection request may be automatically transmitted on a condition that the leading vehicle Ct1 of the rear platoon Fr in the automated driving mode recognizes the identification mark 60 mounted on the rear vehicle Cr of the front platoon Ff.

The leading vehicles Ct1 and Ct2 that have received the connection confirmation transmit the connection permission/rejection response to the vehicle management device 80, and thereafter, the vehicle management device 80 determines whether the connection is permitted based on the connection permission/rej ection response received from both the leading vehicles Ct1 and Ct2 (step S204 of the connection determination process).

Thereafter, similarly to a case where the leading vehicle Ct1 of the rear platoon Fr is in the remote driving mode, a process of the connection permission transmission (step S205), a process of the "platoon connection control", and the like are performed, and the connection between the front platoon Ff and the rear platoon Fr is performed.

As described above, in a case where a connection request or the like is transmitted when a condition such as the fact that a vehicle travels on a highway or the fact that the vehicle starts traveling on a predetermined road designated in advance is satisfied, the vehicle may detect whether the satisfied condition is satisfied at a constant interval, and when the satisfied condition is not satisfied, a following vehicle (or a following platoon) may release the connection traveling and depart or separate.

Similarly, when the travel information is transmitted on a condition that an identification mark of the vehicle C is recognized, the vehicle may perform a process of recognizing the identification mark at a constant interval, and when the identification mark is not recognized, the following vehicle (or the following platoon) may release the connection traveling and depart or separate.

In the above embodiment, a vehicle management program is stored in a recording medium readable by the vehicle travel control device 1 (a first computer) and the vehicle management device 80 (a second computer), and a process is performed by the vehicle travel control device 1 and the vehicle management device 80 reading and executing the program. Here, the recording medium readable by the vehicle travel control device 1 and the vehicle management device 80 is a magnetic disk, a magneto-optical disk, a CD-ROM, a DVD-ROM, a semi-conductor memory, or the like.

Alternatively, dedicated software may be activated using a terminal (a mobile terminal) serving as the vehicle travel control device 1 and the vehicle management device 80, and the vehicle management program may be executed on a web browser.

In the above embodiment, the vehicle management device, the vehicle management method, the vehicle management system, and the vehicle management program according to the present invention are mainly described.

According to the vehicle management device, the vehicle management method, the vehicle management system, and the vehicle management program described above, it is possible to smoothly perform the connection between platoons by transmitting connection modes of the platoons to the leading vehicles and instructing the connection between platoons when the platoons are connected.

That is, the vehicle management device 80 provides, only to the leading vehicle of a group of platoons, information necessary for the determination of whether the connection between the platoons F is permitted, transmission of the connection permission, management of the connection state, and connection, and since the vehicles following the leading vehicle are driven by a vehicle travel control system, and thus the vehicle management device 80 does not directly manage the entire group of vehicles in the platoon F. Therefore, the process performed by the vehicle management device 80 becomes simple, and thus it is possible to smoothly perform the connection between platoons.

In addition, since the number of leading vehicles is reduced by connecting the platoons, it is possible to reduce the number of vehicles driven by remote driving or automated driving, and it is possible to reduce the communication charge for the remote driving or the automated driving. By connecting the platoons, it is possible to inform the surrounding vehicles constituting the platoons that the vehicles are automated driving vehicles or remote driving vehicles toward the same destination, and the risk of other vehicles cutting in between the vehicles and the risk of road rage can be reduced.

The above embodiment is merely an example for facilitating the understanding of the present invention, and does not limit the present invention. It is needless to say that the present invention can be changed or modified without departing from a scope of the present invention, and includes the equivalents thereof.

The above embodiment will be additionally described below.

### (Appendix 1)

A vehicle management device according to the present invention is a vehicle management device configured to manage a vehicle, the vehicle management device including: a second communication unit configured to perform communication with a first communication unit in the vehicle, the vehicle including an absolute position calculation unit configured to acquire GNSS information required for standalone positioning through a GNSS receiver mounted on a host vehicle and calculate an absolute position of the vehicle using the GNSS information, a relative position calculation unit configured to, in response to GNSS correction information required for relative positioning being received from an external reference station, correct the absolute position by the relative positioning using the GNSS correction information and calculate a relative position of the vehicle at the reference station, a position specification unit configured to specify a current position of the vehicle using the relative position, a travel control unit configured to control traveling of the vehicle based on current position information specified by the position specification unit, and the first communication unit configured to transmit and receive the current position information of the vehicle; a management unit configured to manage a travel state of each vehicle subjected to travel control by the travel control unit based on position information of the vehicle acquired by the second communication unit through communication with each vehicle; and a state control unit configured to control the travel state of the vehicle managed by the management unit, in which: the management unit manages each vehicle to be in a travel state where a plurality of vehicles form a group of platoons while traveling based on position information received from another vehicle different from the vehicle; and the state control unit includes: a determination unit configured to determine, when the management unit manages the travel state where the vehicles travel while forming the group of platoons, whether connection between the platoons is permitted based on the travel state of the vehicle; a decision unit configured to decide a connection mode between the platoons based on a determination result obtained by the determination unit; an instruction unit configured to instruct the connection between the platoons by transmitting information on the connection mode decided by the decision unit to a leading vehicle of each platoon; and a connection control unit configured to control the connection between the platoons through communication with the leading vehicle instructed by the instruction unit.

### (Appendix 2)

In the vehicle management device according to Appendix 1, the second communication unit is configured to receive a connection request from a leading vehicle forming a first platoon, the connection request requesting connection with a second platoon serving as a target to be connected, the determination unit is configured to determine whether the connection with the second platoon is possible based on a travel state of a leading vehicle of the second platoon managed by the management unit, and the decision unit is configured to request the leading vehicle of the second platoon to connect with the first platoon in response to the determination unit determining that the connection with the second platoon is possible, and in response to receiving a permission response from the second platoon, decide a connection mode between the first platoon and the second platoon based on platoon information of the second platoon included in the permission response.

### (Appendix 3)

In the vehicle management device according to Appendix 2, the predetermined connection condition is that, based on scheduled travel route information of each platoon, the platoons are connected and travel in a case in which a platoon travel distance after the connection of the platoons is a predetermined distance, and the connection between the platoons is released in a case in which the platoon travel distance is not the predetermined distance.

### (Appendix 4)

In the vehicle management device according to Appendix 1, the second communication unit is configured to receive images of a host vehicle captured by an image capturing device of the vehicle, the management unit is configured to manage a platoon image as a travel state of the platoon, the platoon image being obtained by synthesizing, among the images received from the vehicles, images of a leading vehicle and a rearmost vehicle of each platoon, and the determination unit is configured to determine whether the connection between the platoons is permitted based on the platoon image.

### REFERENCE SIGNS LIST

S: vehicle management system
S1: vehicle travel control system
C: vehicle
V: host vehicle
V1: electric power steering
V1a: steering wheel
V2: electric throttle
V2a: accelerator pedal
V3: electromagnetic brake device
V3a: brake pedal
FV: target vehicle
1: vehicle travel control device
10: in-vehicle sensor
11: image capturing device
11a to 11i: first image capturing device to ninth image capturing device
12: radar (millimeter wave radar)
12a to 12d: first radar to fourth radar
13: lidar
13a to 13e: first lidar to fifth lidar
20: in-vehicle locator
21: GNSS receiver (RTK-GNSS receiver)
22: inertial measurement unit (IMU)
30: in-vehicle ECU
31: integrated ECU
32: steering wheel ECU
33: accelerator ECU
34: brake ECU
40: in-vehicle communication device
50: vehicle information transmission device
51: in-vehicle locator
51a: GNSS receiver
51b: inertial measurement unit
52: in-vehicle communication device
60: identification mark
60a to 60l: first identification mark to twelfth identification mark
70: remote control device
71: monitor
72: navigation monitor
73: steering wheel
74: accelerator pedal
75: brake pedal
76: operation switch
80: vehicle management device
81: communication device
100: storage unit
101: environment information acquisition unit
102: position information acquisition unit
102a: absolute position calculation unit
102b: relative position calculation unit
102c: correction position calculation unit
102d: reception determination unit
103: driving control unit (travel control unit)
104: vehicle detection unit
105: communication unit
106: mode change unit
107: travel speed acquisition unit
108: video processing unit
500: storage unit
501: position information acquisition unit
502: communication unit
700: storage unit
701: communication unit
702: screen display unit
703: operation data generation unit
704: user notification unit
800: storage unit
801: communication unit (second communication unit)
802: management unit (management unit)
803: state control unit
804: determination unit
805: decision unit
806: instruction unit
807: connection control unit
SA: artificial satellite
ST: reference station
F: platoon
Ff: front platoon (second platoon)
Fr: rear platoon (first platoon)
Ct, Ct1, Ct2: leading vehicle
Cr: rear vehicle
Ce: rearmost vehicle
P: synthesized image

## Claims

1. A vehicle travel control device configured to control traveling of a vehicle based on current position information of the vehicle,
the vehicle travel control device being connected to a remote control device configured to operate the traveling of the vehicle through communication via a network,
the vehicle travel control device comprising:
an absolute position calculation unit configured to acquire GNSS information required for standalone positioning through a GNSS receiver mounted on the vehicle and calculate an absolute position of the vehicle by the standalone positioning;
a reception determination unit configured to determine whether GNSS correction information required for relative positioning can be received from an external reference station;
a relative position calculation unit configured to calculate a relative position of the vehicle by the relative positioning; and
a communication unit configured to transmit the current position information of the vehicle to the remote control device,
wherein the communication unit is configured to:
transmit position information based on the relative position in a case in which the GNSS correction information can be received; and
transmit position information based on the absolute position in a case in which the GNSS correction information cannot be received.

2. The vehicle travel control device according to claim 1, further comprising:
a correction position calculation unit configured to acquire acceleration and angular velocity information of the vehicle from an inertial measurement unit mounted on the vehicle and calculate a corrected relative position obtained by correcting the relative position of the vehicle based on the GNSS correction information and the acceleration and angular velocity information,
wherein in a case in which the GNSS correction information can be received, the current position information of the vehicle is position information specified using the corrected relative position obtained by correcting the relative position.

3. The vehicle travel control device according to claim 2,
wherein the correction position calculation unit is further configured to calculate a corrected absolute position obtained by correcting the absolute position of the vehicle based on the GNSS information and the acceleration and angular velocity information, and
wherein in a case in which the GNSS correction information cannot be received, the current position information of the vehicle is position information specified using the corrected absolute position.

4. The vehicle travel control device according to claim 2,
wherein the reception determination unit is further configured to
determine whether the GNSS information can be received, and
determine, in response to determining that the GNSS information can be received, whether the GNSS correction information can be subsequently received, and
wherein in response to determining that the GNSS information cannot be received, the position specification unit specifies the current position of the vehicle using an estimated position of the vehicle calculated based on received latest GNSS information and the acceleration and angular velocity information.

5. A method for acquiring vehicle position information executed by a computer configured to control traveling of a vehicle based on current position information of the vehicle, the method comprising:
by the computer connected to a remote control device configured to operate the traveling of the vehicle through communication via a network,
acquiring GNSS information required for standalone positioning through a GNSS receiver mounted on the vehicle, and calculating an absolute position of the vehicle by the standalone positioning;
determining whether GNSS correction information required for relative positioning can be received from an external reference station;
calculating a relative position of the vehicle by the relative positioning; and
transmitting position information based on the relative position to the remote control device in a case in which the GNSS correction information can be received; and
transmitting position information based on the absolute position to the remote control device in a case in which the GNSS correction information cannot be received.

6. A computer-readable recording medium storing a program for acquiring vehicle position information, the program causing a computer, the computer serving as a vehicle travel control device configured to control traveling of a vehicle based on current position information of the vehicle, to execute:
a process of acquiring GNSS information required for standalone positioning through a GNSS receiver mounted on the vehicle and calculating an absolute position of the vehicle by standalone positioning;
a process of determining whether GNSS correction information required for relative positioning can be received from an external reference station;
a process of calculating a relative position of the vehicle by the relative positioning; and
a process of transmitting position information based on the relative position to a remote control device configured to operate traveling of the vehicle through communication with the computer via a network in a case in which the GNSS correction information can be received and transmitting position information based on the absolute position to the remote control device in a case in which the GNSS correction information cannot be received.

7. A program for acquiring vehicle position information, the program causing a computer serving as a vehicle travel control device configured to control traveling of a vehicle based on current position information of the vehicle to execute:
a process of acquiring GNSS information required for standalone positioning through a GNSS receiver mounted on the vehicle and calculating an absolute position of the vehicle by standalone positioning;
a process of determining whether GNSS correction information required for relative positioning can be received from an external reference station;
a process of calculating a relative position of the vehicle by the relative positioning; and
a process of transmitting position information based on the relative position to a remote control device configured to operate traveling of the vehicle through communication with the computer via a network in a case in which the GNSS correction information can be received and transmitting position information based on the absolute position to the remote control device in a case in which the GNSS correction information cannot be received.
